# EUROPEAN PATENT APPLICATION

(11) **EP 4 060 951 A1**
(43) Date of publication of application: **21.09.2022**
(21) Application number: 20907915.1
(22) Date of filing: 27.09.2020
(51) Int. Cl.: H04L 12/721

(54) **METHOD FOR TRANSMITTING DATA MESSAGE, APPARATUS, AND SYSTEM**

(30) Priority: 26.12.2019 CN 201911369680
(71) Applicant: Huawei Technologies Co., Ltd., Shenzhen, Guangdong 518129 (CN)
(72) Inventor: DONG, Jie, Shenzhen, Guangdong 518129 (CN)
(74) Representative: Goddar, Heinz J.
(86) International application number: PCT/CN2020/118196
(87) International publication number: WO 2021/129014

(57) **Abstract**

Embodiments of this application relate to the field of communications technologies, and provide a method, apparatus, and system for transmitting a data packet, to resolve the following technical problem in a conventional technology: When there are a relatively large quantity of network slices, because a relatively large quantity of locators are required, an information amount of the locators advertised by using a communications protocol is increased, complexity of route calculation is increased, and a scale of a forwarding table is also increased, which is not conducive to scalability of network slices in a network. The method includes: A first network node obtains a topology positioning identifier used to indicate a location of the first network node in a network topology of a first network slice; the first network node obtains a first resource identifier used to indicate a first processing resource corresponding to the first network slice, where the first processing resource is used to process a data packet to be transmitted in the first network slice; and the first network node generates, based on the topology positioning identifier and the first resource identifier, a first segment identifier including the topology positioning identifier and the first resource identifier, and advertises the first segment identifier.

## Description

This application claims priority to Chinese Patent Application No. 201911369680.3, filed with the China National Intellectual Property Administration on December 26, 2019 and entitled "METHOD, APPARATUS, AND SYSTEM FOR TRANSMITTING DATA PACKET", which is incorporated herein by reference in its entirety.

### TECHNICAL FIELD

The present invention relates to the field of communications technologies, and in particular, to a method, apparatus, and system for transmitting a data packet.

### BACKGROUND

Through enhancement of various capabilities of a fifth generation (Fifth Generation, 5G) network, the network can support various new services, for example, a virtual reality (virtual reality, VR) service, an augmented reality (augmented reality, AR) service, a remote industrial control service, a self-driving service, and an Internet of things service. Different types of services have quite different network transmission requirements. Therefore, to satisfy transmission requirements of different services, in a 5G network, a physical bearer network is divided into different network slices through bearer network slicing, and different services are transmitted through different network slices. Each network slice may include a plurality of different network nodes, a plurality of network nodes may belong to one network slice, and one network node may join a plurality of network slices.

Each network node may join a plurality of bearer network slices. Therefore, to distinguish the plurality of network slices that the network node joins, a correspondence between a network slice and a network node is established. In a conventional technology, a network node establishes a correspondence between a network slice and the network node by using a locator field (locator) in a segment routing version 6 (segment routing version 6, SRv6) segment identifier (segment identification, SID).

Each network node allocates different locators to different network slices that the network node joins, and advertises the allocated locators to a controller or another network node by using a communications protocol. During data transmission, the controller performs route calculation based on the received locators allocated by each network node, and the network node forwards a data packet based on a route calculation result. When a relatively large quantity of network slices are established in the 5G network, each network node joins a relatively large quantity of network slices, and allocates a relatively large quantity of locators to the network slices that the network node joins. In this case, because a relatively large quantity of locators are required, an information amount of the locators advertised by using the communications protocol is increased, complexity of route calculation is increased, and a scale of a forwarding table is also increased. This is not conducive to scalability of network slices in the 5G network.

### SUMMARY

In view of this, an objective of the present invention is to provide a method, apparatus, and system for transmitting a data packet, to resolve the following technical problem in a conventional technology: When there are a relatively large quantity of network slices, because a relatively large quantity of locators are required, an information amount of the locators advertised by using a communications protocol is increased, complexity of route calculation is increased, and a scale of a forwarding table is also increased, which is not conducive to scalability of network slices in a network.

According to a first aspect, a method for generating a segment identifier in a network is provided. The network may include a first network slice, and the first network slice is a network slice that a first network node joins. The method may include: The first network node obtains a topology positioning identifier used to indicate a location of the first network node in a network topology of the first network slice; the first network node obtains a first resource identifier used to indicate a first processing resource corresponding to the first network slice, where the first processing resource is used to process a data packet to be transmitted in the first network slice; and the first network node generates, based on the topology positioning identifier and the first resource identifier, a first segment identifier including the topology positioning identifier and the first resource identifier, and advertises the first segment identifier.

Based on the method described in the first aspect, the first network node generates the first segment identifier based on the topology positioning identifier and the first resource identifier. Compared with a conventional technology in which a network topology and a resource identifier are coupled to generate a locator to identify a network slice corresponding to a network node, in this embodiment of this application, a topology positioning identifier is decoupled from a resource identifier; and when a network node joins a plurality of network slices, the network node may allocate a same topology positioning identifier to network slices with a same network topology, to reduce a quantity of required topology positioning identifiers in a network. In this way, an information amount of a topology positioning identifier advertised by using a communications protocol is reduced, complexity of route calculation is reduced, and a scale of a forwarding table is reduced. This is conducive to scalability of network slices in the network.

In a possible design, based on the first aspect, the first network node may receive the topology positioning identifier from a controller; or the first network node receives the network topology of the first network slice from a controller, and the first network node allocates the topology positioning identifier to the first network slice based on the network topology.

Based on this possible design, the first network node may obtain the topology positioning identifier from the controller to reduce processing load of the first network node; or the first network node may obtain the network topology of the first network slice from the controller, and allocate the topology positioning identifier to the first network slice based on the network topology. This is not limited.

In a possible design, with reference to the first aspect or the possible design of the first aspect, the first network node receives the first resource identifier from the controller; or the first network node receives processing resource requirement information of the first network slice from the controller, determines the first processing resource based on the processing resource requirement information, and allocates the first resource identifier to the first processing resource.

Based on this possible design, the first network node may obtain the first resource identifier from the controller to reduce processing load of the first network node; or the first network node may obtain the processing resource requirement information of the first network slice from the controller, allocate the first processing resource to the first network slice based on the processing resource requirement information, and allocate the first resource identifier to the first processing resource. This is not limited.

In a possible design, with reference to the first aspect or the possible designs of the first aspect, the network further includes a second network slice, the second network slice is a network slice that the first network node joins, the network topology of the first network slice is the same as a network topology of the second network slice; and the topology positioning identifier is further used to indicate a location of the first network node in the network topology of the second network slice. The first network node may further obtain a second resource identifier used to indicate a second processing resource corresponding to the second network slice, where the second processing resource is used to process a data packet to be transmitted in the second network slice, and the second resource identifier is different from the first resource identifier. The first network node generates a second segment identifier based on the topology positioning identifier and the second resource identifier, where the second segment identifier includes the topology positioning identifier and the second resource identifier. The first network node advertises the second segment identifier.

Based on this possible design, when the network topology of the first network slice that the first network node joins is the same as the network topology of the second network slice, the topology positioning identifier corresponding to the first network slice is the same as a topology positioning identifier corresponding to the second network slice. In this embodiment of this application, a same topology positioning identifier is allocated to network slices with a same network topology, so that a quantity of allocated topology positioning identifiers can be reduced. In addition, the network slices corresponding to the same topology positioning identifier are distinguished by using different resource identifiers, to reduce the quantity of allocated topology positioning identifiers while effectively distinguishing the network slices. This is conducive to scalability of the network slices.

In a possible design, with reference to the first aspect or the possible designs of the first aspect, the first network node sends the topology positioning identifier and/or the first resource identifier to at least one second network node.

Based on this possible design, the first network node sends the topology positioning identifier and/or the first resource identifier to at least one second network node other than the first network node, so that the second network node can establish a corresponding mapping relationship based on the topology positioning identifier and the first resource identifier from the first network node, and forward a received data packet based on the mapping relationship.

In a possible design, with reference to the first aspect or the possible designs of the first aspect, when advertising the first segment identifier, the first network node may further advertise flag information used to indicate that the first segment identifier includes the topology positioning identifier and the first resource identifier.

Based on this possible design, the first network node advertises the flag information used to indicate that the first segment identifier includes the topology positioning identifier and the first resource identifier, so that a network node that receives the first segment identifier can learn that the first segment identifier includes the topology positioning identifier and the first resource identifier that are in a decoupled form.

In a possible design, with reference to the first aspect or the possible designs of the first aspect, the first segment identifier includes a locator field, and the locator field includes the first resource identifier; the first segment identifier includes a function field, and the function field includes the first resource identifier; or the first segment identifier includes a parameter field, and the parameter field includes the first resource identifier.

Based on this possible design, the first network node may place the resource identifier in the locator field, the function field, or the parameter field in the first segment identifier based on a transmission requirement or the like. In this way, design manners are flexible and diverse. This is not limited.

According to a second aspect, a communications apparatus is provided. The communications apparatus can implement functions performed by the first network node in the first aspect or the possible designs of the first aspect, and the functions may be implemented by hardware executing corresponding software. The hardware or the software includes one or more modules corresponding to the functions. For example, the communications apparatus includes an obtaining module and a processing module.

The obtaining module is configured to obtain a topology positioning identifier used to indicate a location of the first network node in a network topology of a first network slice, and is further configured to obtain a first resource identifier used to indicate a first processing resource corresponding to the first network slice, where the first processing resource is used to process a data packet to be transmitted in the first network slice.

The processing module is configured to: generate, based on the topology positioning identifier and the first resource identifier, a first segment identifier including the topology positioning identifier and the first resource identifier, and advertise the first segment identifier.

For a specific implementation of the communications apparatus, refer to the behavioral functions of the first network node in the method for generating a segment identifier in a network according to any one of the first aspect or the possible designs of the first aspect. Based on the communications apparatus in the second aspect, the first network node generates the first segment identifier based on the topology positioning identifier and the first resource identifier. Compared with a conventional technology in which a network topology and a resource identifier are coupled to generate a locator to identify a network slice corresponding to a network node, in this embodiment of this application, a topology positioning identifier is decoupled from a resource identifier; and when a network node joins a plurality of network slices, the network node may allocate a same topology positioning identifier to network slices with a same network topology, to reduce a quantity of required topology positioning identifiers in a network. In this way, an information amount of a topology positioning identifier advertised by using a communications protocol is reduced, complexity of route calculation is reduced, and a scale of a forwarding table is reduced. This is conducive to scalability of network slices in the network.

In a possible design, based on the second aspect, the communications apparatus may further include a receiving module; the obtaining module is further configured to receive the topology positioning identifier from a controller, or receive the network topology of the first network slice from a controller; and the processing module is further configured to allocate the topology positioning identifier to the first network slice based on the network topology.

Based on this possible design, the first network node may obtain the topology positioning identifier from the controller to reduce processing load of the first network node; or the first network node may obtain the network topology of the first network slice from the controller, and allocate the topology positioning identifier to the first network slice based on the network topology. This is not limited.

In a possible design, with reference to the second aspect or the possible design of the second aspect, the obtaining module is further configured to receive the first resource identifier from the controller, or receive processing resource requirement information of the first network slice from the controller; and the processing module is further configured to: determine the first processing resource based on the processing resource requirement information, and allocate the first resource identifier to the first processing resource.

Based on this possible design, the first network node may obtain the first resource identifier from the controller to reduce processing load of the first network node; or the first network node may obtain the processing resource requirement information of the first network slice from the controller, allocate the first processing resource to the first network slice based on the processing resource requirement information, and allocate the first resource identifier to the first processing resource. This is not limited.

In a possible design, with reference to the second aspect or the possible designs of the second aspect, the network further includes a second network slice, the second network slice is a network slice that the first network node joins, the network topology of the first network slice is the same as a network topology of the second network slice; and the topology positioning identifier is further used to indicate a location of the first network node in the network topology of the second network slice; the processing module is further configured to obtain a second resource identifier used to indicate a second processing resource corresponding to the second network slice, where the second processing resource is used to process a data packet to be transmitted in the second network slice, and the second resource identifier is different from the first resource identifier; the processing module is further configured to generate a second segment identifier based on the topology positioning identifier and the second resource identifier, where the second segment identifier includes the topology positioning identifier and the second resource identifier; and the processing module is further configured to advertise the second segment identifier.

Based on this possible design, when the network topology of the first network slice that the first network node joins is the same as the network topology of the second network slice, the topology positioning identifier corresponding to the first network slice is the same as a topology positioning identifier corresponding to the second network slice. In this embodiment of this application, a same topology positioning identifier is allocated to network slices with a same network topology, so that a quantity of allocated topology positioning identifiers can be reduced. In addition, the network slices corresponding to the same topology positioning identifier are distinguished by using different resource identifiers, to reduce the quantity of allocated topology positioning identifiers while effectively distinguishing the network slices. This is conducive to scalability of the network slices.

In a possible design, with reference to the second aspect or the possible designs of the second aspect, the communications apparatus further includes a sending module, where the sending module is configured to send the topology positioning identifier and/or the first resource identifier to at least one second network node.

Based on this possible design, the first network node sends the topology positioning identifier and/or the first resource identifier to at least one second network node other than the first network node, so that the second network node can establish a corresponding mapping relationship based on the topology positioning identifier and the first resource identifier from the first network node, and forward a received data packet based on the mapping relationship.

In a possible design, with reference to the second aspect or the possible designs of the second aspect, the processing module is further configured to: when advertising the first segment identifier, advertise flag information used to indicate that the first segment identifier includes the topology positioning identifier and the first resource identifier.

Based on this possible design, the first network node advertises the flag information used to indicate that the first segment identifier includes the topology positioning identifier and the first resource identifier, so that a network node that receives the first segment identifier can learn that the first segment identifier includes the topology positioning identifier and the first resource identifier that are in a decoupled form.

In a possible design, with reference to the second aspect or the possible designs of the second aspect, the first segment identifier includes a locator field, and the locator field includes the first resource identifier; the first segment identifier includes a function field, and the function field includes the first resource identifier; or the first segment identifier includes a parameter field, and the parameter field includes the first resource identifier.

Based on this possible design, the first network node may place the resource identifier in the locator field, the function field, or the parameter field in the first segment identifier based on a transmission requirement or the like. In this way, design manners are flexible and diverse. This is not limited.

According to a third aspect, a communications apparatus is provided. The communications apparatus may be a first network node or a chip or a system on chip in a first network node. The communications apparatus can implement functions performed by the first network node in the foregoing aspects or possible designs, and the functions may be implemented by hardware. In a possible design, the communications apparatus may include a transceiver, a processor, and a communications interface. The transceiver and the processor may be configured to support the communications apparatus in implementing functions in any one of the first aspect or the possible designs of the first aspect. For example, the transceiver may be configured to obtain, through the communications interface, a topology positioning identifier used to indicate a location of the first network node in a network topology of a first network slice, and may be further configured to obtain a first resource identifier used to indicate a first processing resource corresponding to the first network slice, where the first processing resource is used to process a data packet to be transmitted in the first network slice. The processor may be configured to generate, based on the topology positioning identifier and the first resource identifier, a first segment identifier including the topology positioning identifier and the first resource identifier. The processor may be further configured to advertise the first segment identifier through the communications interface. In another possible design, the communications apparatus may further include a memory. The memory is configured to store computer-executable instructions and data that are necessary for the communications apparatus. When the communications apparatus runs, the processor executes the computer-executable instructions stored in the memory, so that the communications apparatus performs the method for generating a segment identifier in a network according to any one of the first aspect or the possible designs of the first aspect.

For a specific implementation of the communications apparatus, refer to the behavioral functions of the first network node in the method for generating a segment identifier in a network according to any one of the first aspect or the possible designs of the first aspect.

According to a fourth aspect, a communications apparatus is provided. The communications apparatus includes one or more processors and one or more memories, where the one or more memories are coupled to the one or more processors; the one or more memories are configured to store computer program code or computer instructions; and when the one or more processors execute the computer instructions, the communications apparatus is enabled to perform the method for generating a segment identifier in a network according to any one of the first aspect or the possible designs of the first aspect.

According to a fifth aspect, a computer-readable storage medium is provided. The computer-readable storage medium stores computer instructions or a program. When the computer instructions or the program is run on a computer, the computer is enabled to perform the method for generating a segment identifier in a network according to any one of the first aspect or the possible designs of the first aspect.

According to a sixth aspect, a computer program product including instructions is provided. When the computer program product runs on a computer, the computer is enabled to perform the method for generating a segment identifier in a network according to any one of the first aspect or the possible designs of the first aspect.

For technical effects brought by any design manner in the third aspect to the sixth aspect, refer to the technical effects brought by any possible design in the first aspect and the second aspect. Details are not described again.

According to a seventh aspect, a method for receiving an identifier in a network is provided. The network includes a first network slice, and the first network slice is a network slice that a first network node and a second network node join. The method may include: The second network node receives a topology positioning identifier that is from the first network node and that is used to indicate a location of the first network node in a network topology of the first network slice; and the second network node determines a mapping relationship between the topology positioning identifier and next hop information used to send a data packet to the first network node, where the next-hop information includes a next hop node and an outbound interface of the second network node.

Based on the method in the seventh aspect, the second network node determines the mapping relationship between the topology positioning identifier and the next hop node and the outbound interface based on the received topology positioning identifier corresponding to the first network node. This provides a feasible solution for the second network node to forward the received data packet to the next hop node through the outbound interface based on the mapping relationship.

In a possible design, with reference to the seventh aspect or a possible design of the seventh aspect, the second network node may further receive a first resource identifier that is from the first network node and that is used to indicate a processing resource corresponding to the first network slice; and the second network node determines a mapping relationship between the first resource identifier and a first sub-interface of the outbound interface, where the first sub-interface is configured to send a data packet to the first network node in the first network slice.

Based on this possible design, the second network node determines the mapping relationship between the first resource identifier and the first sub-interface of the outbound interface based on the received first resource identifier corresponding to the first network node. This provides a feasible solution for the second network node to forward the received data packet to the next hop node through the first sub-interface based on the mapping relationship.

In a possible design, with reference to the seventh aspect or the possible design of the seventh aspect, the second network node may further receive the first resource identifier and a network slice identifier used to identify the first network slice from the first network node; and the second network node determines a mapping relationship between the first resource identifier and the first network slice based on the network slice identifier.

Based on this possible design, the second network node may identify, based on the received first resource identifier and the received network slice identifier, the network slice corresponding to the first resource identifier. This provides a feasible solution for determining the mapping relationship between the first resource identifier and the network slice.

In a possible design, with reference to the seventh aspect or the possible designs of the seventh aspect, that the second network node determines a mapping relationship between the topology positioning identifier and next hop information may include: The second network node determines a mapping relationship between the topology positioning identifier and an Internet Protocol IP address prefix; and the second network node determines a mapping relationship between the IP address prefix and the next hop information.

Based on this possible design, the second network node establishes the mapping relationship between the topology positioning identifier and the next hop information by using the IP address prefix. This provides a feasible solution for the second network node to determine, based on the mapping relationship, the next hop information required for forwarding the data packet.

In a possible design, with reference to the seventh aspect or the possible designs of the seventh aspect, the second network node may further receive flag information from the first network node, where the flag information is used to indicate that a first segment identifier includes the topology positioning identifier and the first resource identifier.

Based on this possible design, after receiving the flag information, the second network node may learn of, based on the flag information, formats and locations of the topology positioning identifier and the first resource identifier in the first segment identifier, so that the second network node identifies content of the first segment identifier.

In a possible design, with reference to the seventh aspect or the possible designs of the seventh aspect, the network further includes a second network slice, the second network slice is a network slice that the first network node and the second network node join, the network topology of the first network slice is the same as a network topology of the second network slice, and the topology positioning identifier is further used to indicate a location of the first network node in the network topology of the second network slice; the second network node receives a second resource identifier from the first network node, where the second resource identifier is used to indicate a processing resource corresponding to the second network slice, and the second resource identifier is different from the first resource identifier; and the second network node determines a mapping relationship between the second resource identifier and a second sub-interface of the outbound interface, where the second sub-interface is configured to send a data packet to the first network node in the second network slice.

Based on this possible design, when the network topology of the first network slice that the first network node joins is the same as the network topology of the second network slice, the topology positioning identifier corresponding to the first network slice is the same as a topology positioning identifier corresponding to the second network slice. In this embodiment of this application, a same topology positioning identifier is allocated to network slices with a same network topology, so that a quantity of allocated topology positioning identifiers can be reduced. In addition, the network slices corresponding to the same topology positioning identifier are distinguished by using different resource identifiers, to reduce the quantity of allocated topology positioning identifiers while effectively distinguishing the network slices. This is conducive to scalability of the network slices.According to an eighth aspect, a communications apparatus is provided. The communications apparatus can implement functions performed by the second network node in the seventh aspect or the possible designs of the seventh aspect, and the functions may be implemented by hardware executing corresponding software. The hardware or the software includes one or more modules corresponding to the functions. For example, the communications apparatus includes a receiving module and a processing module.

The receiving module is configured to receive a topology positioning identifier that is from a first network node and that is used to indicate a location of the first network node in a network topology of a first network slice. The processing module is configured to determine a mapping relationship between the topology positioning identifier and next hop information used to send a data packet to the first network node, where the next hop information includes a next hop node and an outbound interface of the second network node.

For a specific implementation of the communications apparatus, refer to the behavioral functions of the second network node in the method for receiving an identifier in a network according to any one of the seventh aspect or the possible designs of the seventh aspect. Based on the communications apparatus described in the eighth aspect, the second network node determines the mapping relationship between the topology positioning identifier and the next hop node and the outbound interface based on the received topology positioning identifier corresponding to the first network node. This provides a feasible solution for the second network node to forward the received data packet to the next hop node through the outbound interface based on the mapping relationship.

In a possible design, with reference to the eighth aspect or a possible design of the eighth aspect, the receiving module is further configured to receive a first resource identifier that is from the first network node and that is used to indicate a processing resource corresponding to the first network slice; and the processing module is further configured to determine a mapping relationship between the first resource identifier and a first sub-interface of the outbound interface, where the first sub-interface is configured to send a data packet to the first network node in the first network slice.

Based on this possible design, the second network node determines the mapping relationship between the first resource identifier and the first sub-interface of the outbound interface based on the received first resource identifier corresponding to the first network node. This provides a feasible solution for the second network node to forward the received data packet to the next hop node through the first sub-interface based on the mapping relationship.

In a possible design, with reference to the eighth aspect or the possible design of the eighth aspect, the receiving module is further configured to receive the first resource identifier and a network slice identifier used to identify the first network slice from the first network node; and the processing module is further configured to determine a mapping relationship between the first resource identifier and the first network slice based on the network slice identifier.

Based on this possible design, the second network node may identify, based on the received first resource identifier and the received network slice identifier, the network slice corresponding to the first resource identifier. This provides a feasible solution for determining the mapping relationship between the first resource identifier and the network slice.

In a possible design, with reference to the eighth aspect or the possible designs of the eighth aspect, the processing module is specifically further configured to: determine a mapping relationship between the topology positioning identifier and an Internet Protocol IP address prefix, and determine a mapping relationship between the IP address prefix and the next hop information.

Based on this possible design, the second network node establishes the mapping relationship between the topology positioning identifier and the next hop information by using the IP address prefix. This provides a feasible solution for the second network node to determine, based on the mapping relationship, the next hop information required for forwarding the data packet.

In a possible design, with reference to the eighth aspect or the possible designs of the eighth aspect, the receiving module is further configured to receive flag information that is from the first network node and that is used to indicate that a first segment identifier includes the topology positioning identifier and the first resource identifier.

Based on this possible design, after receiving the flag information, the second network node may learn of, based on the flag information, formats and locations of the topology positioning identifier and the first resource identifier in the first segment identifier, so that the second network node identifies content of the first segment identifier.

In a possible design, with reference to the eighth aspect or the possible designs of the eighth aspect, the network further includes a second network slice, the second network slice is a network slice that the first network node joins, the network topology of the first network slice is the same as a network topology of the second network slice, and the topology positioning identifier is further used to indicate a location of the first network node in the network topology of the second network slice; the receiving module is further configured to receive a second resource identifier from the first network node, where the second resource identifier is used to indicate a processing resource corresponding to the second network slice, and the second resource identifier is different from the first resource identifier; and the processing module is further configured to determine a mapping relationship between the second resource identifier and a second sub-interface of the outbound interface, where the second sub-interface is configured to send a data packet to the first network node in the second network slice.

Based on this possible design, when the network topology of the first network slice that the first network node joins is the same as the network topology of the second network slice, the topology positioning identifier corresponding to the first network slice is the same as a topology positioning identifier corresponding to the second network slice. In this embodiment of this application, a same topology positioning identifier is allocated to network slices with a same network topology, so that a quantity of allocated topology positioning identifiers can be reduced. In addition, the network slices corresponding to the same topology positioning identifier are distinguished by using different resource identifiers, to reduce the quantity of allocated topology positioning identifiers while effectively distinguishing the network slices. This is conducive to scalability of the network slices.

According to a ninth aspect, a communications apparatus is provided. The communications apparatus may be a second network node or a chip or a system on chip in a second network node. The communications apparatus can implement functions performed by the second network node in the foregoing aspects or possible designs, and the functions may be implemented by hardware. In a possible design, the communications apparatus may include a transceiver, a processor, and a communications interface. The transceiver and the processor may be configured to support the communications apparatus in implementing functions in any one of the seventh aspect or the possible designs of the seventh aspect. For example, the transceiver may be configured to receive, through the communications interface, a topology positioning identifier that is from a first network node and that is used to indicate a location of the first network node in a network topology of a first network slice. The processor may be configured to determine a mapping relationship between the topology positioning identifier and next hop information used to send a data packet to the first network node, where the next hop information includes a next hop node and an outbound interface of the second network node. In another possible design, the communications apparatus may further include a memory. The memory is configured to store computer-executable instructions and data that are necessary for the communications apparatus. When the communications apparatus runs, the processor executes the computer-executable instructions stored in the memory, so that the communications apparatus performs the method for receiving an identifier in a network according to any one of the seventh aspect or the possible designs of the seventh aspect.

For a specific implementation of the communications apparatus, refer to the behavioral functions of the second network node in the method for receiving an identifier in a network according to any one of the seventh aspect or the possible designs of the seventh aspect.

According to a tenth aspect, a communications apparatus is provided. The communications apparatus includes one or more processors and one or more memories, where the one or more memories are coupled to the one or more processors; the one or more memories are configured to store computer program code or computer instructions; and when the one or more processors execute the computer instructions, the communications apparatus is enabled to perform the method for receiving an identifier in a network according to any one of the seventh aspect or the possible designs of the seventh aspect.

According to an eleventh aspect, a computer-readable storage medium is provided. The computer-readable storage medium stores computer instructions or a program. When the computer instructions or the program is run on a computer, the computer is enabled to perform the method for receiving an identifier in a network according to any one of the seventh aspect or the possible designs of the seventh aspect.

According to a twelfth aspect, a computer program product including instructions is provided. When the computer program product runs on a computer, the computer is enabled to perform the method for receiving an identifier in a network according to any one of the seventh aspect or the possible designs of the seventh aspect.

For technical effects brought by any design manner in the ninth aspect to the twelfth aspect, refer to the technical effects brought by any possible design in the seventh aspect and the eighth aspect. Details are not described again.

According to a thirteenth aspect, a method for transmitting a data packet in a network is provided. The network includes a network slice, and the network slice is a network slice that a network node joins. The method includes: The network node receives a data packet including a destination address field, where the destination address field includes a segment identifier including a topology positioning identifier and a resource identifier; the network node determines next hop information based on the topology positioning identifier, where the next hop information includes a next hop node and an outbound interface of the network node; the network node determines a sub-interface of the outbound interface based on the resource identifier; and the network node sends the data packet to the next hop node in the network slice through the sub-interface.

Based on this possible design, the network node determines the next hop node and the outbound interface based on the topology positioning identifier in the segment identifier in a destination address, determines the sub-interface of the outbound interface based on the resource identifier, and forwards the data packet to the next hop node through the sub-interface of the outbound interface. This provides a feasible solution for the network node to forward the data packet based on the segment identifier.

In a possible design, with reference to the thirteenth aspect or a possible design of the thirteenth aspect, that the network node determines next hop information based on the topology positioning identifier includes: The network node determines an Internet Protocol IP address prefix based on the topology positioning identifier; and the network node determines the next hop node and the outbound interface of the network node based on the IP address prefix.

Based on this possible design, the network node determines the IP address prefix based on the topology positioning identifier, and determines the next hop node and the outbound interface based on the IP address prefix. This provides a feasible solution for the network node to determine the next hop node and the outbound interface based on the topology positioning identifier.

In a possible design, with reference to the thirteenth aspect or the possible design of the thirteenth aspect, the segment identifier includes a locator field, and the locator field includes the resource identifier; the segment identifier includes a function field, and the function field includes the resource identifier; or the segment identifier includes a parameter field, and the parameter field includes the resource identifier.Based on this possible design, the resource identifier may be placed in the locator field, the function field, or the parameter field in the segment identifier based on a transmission requirement or the like. In this way, design manners are flexible and diverse. This is not limited.

According to a fourteenth aspect, a communications apparatus is provided. The communications apparatus can implement functions performed by the network node in the thirteenth aspect or the possible designs of the thirteenth aspect, and the functions may be implemented by hardware executing corresponding software. The hardware or the software includes one or more modules corresponding to the functions. For example, the communications apparatus includes a receiving module, a processing module, and a sending module.

The receiving module is configured to receive a data packet including a destination address field, where the destination address field includes a segment identifier including a topology positioning identifier and a resource identifier. The processing module is configured to: determine next hop information based on the topology positioning identifier, where the next hop information includes a next hop node and an outbound interface of the network node; and determine, by the network node, a sub-interface of the outbound interface based on the resource identifier. The sending module is configured to send the data packet to the next hop node in a network slice through the sub-interface.

For a specific implementation of the communications apparatus, refer to the behavioral functions of the network node in the method for transmitting a data packet in a network according to any one of the thirteenth aspect or the possible designs of the thirteenth aspect. Based on the communications apparatus described in the fourteenth aspect, the network node determines the next hop node and the outbound interface based on the topology positioning identifier in the segment identifier in a destination address, determines the sub-interface of the outbound interface based on the resource identifier, and forwards the data packet to the next hop node through the sub-interface of the outbound interface. This provides a feasible solution for the network node to forward the data packet based on the segment identifier.

In a possible design, with reference to the fourteenth aspect or a possible design of the fourteenth aspect, the processing module is specifically configured to: determine an Internet Protocol IP address prefix based on the topology positioning identifier, and determine the next hop node and the outbound interface of the network node based on the IP address prefix.

Based on this possible design, the network node determines the IP address prefix based on the topology positioning identifier, and determines the next hop node and the outbound interface based on the IP address prefix. This provides a feasible solution for the network node to determine the next hop node and the outbound interface based on the topology positioning identifier.

In a possible design, with reference to the fourteenth aspect or the possible design of the fourteenth aspect, the segment identifier includes a locator field, and the locator field includes the resource identifier; the segment identifier includes a function field, and the function field includes the resource identifier; or the segment identifier includes a parameter field, and the parameter field includes the resource identifier.

Based on this possible design, the resource identifier may be placed in the locator field, the function field, or the parameter field in the segment identifier based on a transmission requirement or the like. In this way, design manners are flexible and diverse. This is not limited.

According to a fifteenth aspect, a communications apparatus is provided. The communications apparatus may be a network node or a chip or a system on chip in a network node. The communications apparatus can implement functions performed by the network node in the foregoing aspects or possible designs, and the functions may be implemented by hardware. In a possible design, the communications apparatus may include a transceiver, a processor, and a communications interface. The transceiver and the processor may be configured to support the communications apparatus in implementing functions in any one of the thirteenth aspect or the possible designs of the thirteenth aspect. For example, the transceiver may be configured to receive, through the communications interface, a data packet including a destination address field, where the destination address field includes a segment identifier including a topology positioning identifier and a resource identifier. The processing module may be configured to: determine next hop information based on the topology positioning identifier, where the next hop information includes a next hop node and an outbound interface of the network node; and determine a sub-interface of the outbound interface based on the resource identifier. The transceiver may be further configured to send a data packet to the next hop node in a network slice through the sub-interface. In another possible design, the communications apparatus may further include a memory. The memory is configured to store computer-executable instructions and data that are necessary for the communications apparatus. When the communications apparatus runs, the processor executes the computer-executable instructions stored in the memory, so that the communications apparatus performs the method for transmitting a data packet in a network according to any one of the thirteenth aspect or the possible designs of the thirteenth aspect.

For a specific implementation of the communications apparatus, refer to the behavioral functions of the network node in the method for transmitting a data packet in a network according to any one of the thirteenth aspect or the possible designs of the thirteenth aspect.

According to a sixteenth aspect, a communications apparatus is provided. The communications apparatus includes one or more processors and one or more memories, where the one or more memories are coupled to the one or more processors; the one or more memories are configured to store computer program code or computer instructions; and when the one or more processors execute the computer instructions, the communications apparatus is enabled to perform the method for transmitting a data packet in a network according to any one of the thirteenth aspect or the possible designs of the thirteenth aspect.

According to a seventeenth aspect, a computer-readable storage medium is provided. The computer-readable storage medium stores computer instructions or a program. When the computer instructions or the program is run on a computer, the computer is enabled to perform the method for transmitting a data packet in a network according to any one of the thirteenth aspect or the possible designs of the thirteenth aspect.

According to an eighteenth aspect, a computer program product including instructions is provided. When the computer program product runs on a computer, the computer is enabled to perform the method for transmitting a data packet in a network according to any one of the thirteenth aspect or the possible designs of the thirteenth aspect.

For technical effects brought by any design manner in the fifteenth aspect to the eighteenth aspect, refer to the technical effects brought by any possible design in the thirteenth aspect and the fourteenth aspect. Details are not described again.

According to a nineteenth aspect, a method for transmitting a data packet in a network is provided. The network includes a network slice, and the network slice is a network slice that a network node joins. The method includes: The network node receives a first data packet including a destination address field, where the destination address field includes a segment identifier including a topology positioning identifier and a resource identifier, the segment identifier is a segment identifier corresponding to the network node, the topology positioning identifier is used to indicate a location of the network node in a network topology of the network slice, the resource identifier is used to indicate a processing resource corresponding to the network slice, and the processing resource is used to process a data packet to be transmitted in the network slice; the network node processes the first data packet based on the segment identifier, to obtain a second data packet; and the network node forwards the second data packet in the network slice by using the processing resource determined based on the segment identifier.

Based on this possible design, when the segment identifier in the destination address field in the first data packet is a segment identifier corresponding to the network node, the network node processes the first data packet based on the segment identifier, and forwards, in the network slice by using the processing resource determined based on the segment identifier, the second data packet obtained through processing. This provides a feasible solution for the network node after receiving the first data packet in which the segment identifier included in the destination address field is a segment identifier corresponding to the network node.

In a possible design, with reference to the nineteenth aspect or a possible design of the nineteenth aspect, the segment identifier includes a locator field, and the locator field includes the resource identifier; the segment identifier includes a function field, and the function field includes the resource identifier; or the segment identifier includes a parameter field, and the parameter field includes the resource identifier.

Based on this possible design, the resource identifier may be placed in the locator field, the function field, or the parameter field in the segment identifier based on a transmission requirement or the like. In this way, design manners are flexible and diverse. This is not limited.

According to a twentieth aspect, a communications apparatus is provided. The communications apparatus can implement functions performed by the network node in the nineteenth aspect or the possible design of the nineteenth aspect, and the functions may be implemented by hardware executing corresponding software. The hardware or the software includes one or more modules corresponding to the functions. For example, the communications apparatus includes a receiving module, a processing module, and a sending module.

The receiving module is configured to receive a first data packet including a destination address field, where the destination address field includes a segment identifier including a topology positioning identifier and a resource identifier, and the segment identifier is a segment identifier corresponding to the network node. The processing module is configured to process the first data packet based on the segment identifier, to obtain a second data packet. The sending module is configured to forward the second data packet in a network slice by using a processing resource determined based on the segment identifier.

For a specific implementation of the communications apparatus, refer to the behavioral functions of the network node in the method for transmitting a data packet in a network according to either of the nineteenth aspect or the possible design of the nineteenth aspect. Based on the communications apparatus described in the twentieth aspect, when the segment identifier in the destination address field in the first data packet is a segment identifier corresponding to the network node, the network node processes the first data packet based on the segment identifier, and forwards, in the network slice by using the processing resource determined based on the segment identifier, the second data packet obtained through processing. This provides a feasible solution for the network node after receiving the first data packet in which the segment identifier included in the destination address field is a segment identifier corresponding to the network node.

In a possible design, with reference to the twentieth aspect or a possible design of the twentieth aspect, the segment identifier includes a locator field, and the locator field includes the topology positioning identifier and the resource identifier; the segment identifier includes a function field, and the function field includes the resource identifier; or the segment identifier includes a parameter field, and the parameter field includes the resource identifier.

Based on this possible design, the resource identifier may be placed in the locator field, the function field, or the parameter field in the segment identifier based on a transmission requirement or the like. In this way, design manners are flexible and diverse. This is not limited.

According to a twenty-first aspect, a communications apparatus is provided. The communications apparatus may be a network node or a chip or a system on chip in a network node. The communications apparatus can implement functions performed by the network node in the foregoing aspects or possible designs, and the functions may be implemented by hardware. In a possible design, the communications apparatus may include a transceiver, a processor, and a communications interface. The transceiver and the processor may be configured to support the communications apparatus in implementing functions in either of the nineteenth aspect or the possible design of the nineteenth aspect. For example, the transceiver may be configured to receive, through the communications interface, a first data packet including a destination address field, where the destination address field includes a segment identifier including a topology positioning identifier and a resource identifier, and the segment identifier is a segment identifier corresponding to the network node. The processor may be configured to process the first data packet based on the segment identifier, to obtain a second data packet. The transceiver may be further configured to forward the second data packet in a network slice by using a processing resource determined based on the segment identifier. In another possible design, the communications apparatus may further include a memory. The memory is configured to store computer-executable instructions and data that are necessary for the communications apparatus. When the communications apparatus runs, the processor executes the computer-executable instructions stored in the memory, so that the communications apparatus performs the method for transmitting a data packet in a network according to either of the nineteenth aspect or the possible design of the nineteenth aspect.

For a specific implementation of the communications apparatus, refer to the behavioral functions of the network node in the method for transmitting a data packet in a network according to either of the nineteenth aspect or the possible design of the nineteenth aspect.

According to a twenty-second aspect, a communications apparatus is provided. The communications apparatus includes one or more processors and one or more memories, where the one or more memories are coupled to the one or more processors; the one or more memories are configured to store computer program code or computer instructions; and when the one or more processors execute the computer instructions, the communications apparatus is enabled to perform the method for transmitting a data packet in a network according to either of the nineteenth aspect or the possible design of the nineteenth aspect.

According to a twenty-third aspect, a computer-readable storage medium is provided. The computer-readable storage medium stores computer instructions or a program. When the computer instructions or the program is run on a computer, the computer is enabled to perform the method for transmitting a data packet in a network according to either of the nineteenth aspect or the possible design of the nineteenth aspect.

According to a twenty-fourth aspect, a computer program product including instructions is provided. When the computer program product runs on a computer, the computer is enabled to perform the method for transmitting a data packet in a network according to either of the nineteenth aspect or the possible design of the nineteenth aspect.

For technical effects brought by any design manner in the twenty-first aspect to the twenty-fourth aspect, refer to the technical effects brought by any possible design in the nineteenth aspect and the twentieth aspect. Details are not described again.

According to a twenty-fifth aspect, a communications system is provided. The communications system includes the communications apparatus according to any one of the second aspect or the possible designs of the second aspect and the communications apparatus according to any one of the eighth aspect or the possible designs of the eighth aspect, or includes the communications apparatus according to any one of the fourteenth aspect or the possible designs of the fourteenth aspect, or includes the communications apparatus according to either of the twentieth aspect or the possible design of the twentieth aspect.

### BRIEF DESCRIPTION OF DRAWINGS

FIG. 1 is a simplified schematic diagram of a communications system according to an embodiment of the present invention;
FIG. 2 is a schematic diagram of a composition of a communications apparatus according to an embodiment of the present invention;
FIG. 3 is a schematic diagram of a method for generating a segment identifier in a network according to an embodiment of the present invention;
FIG. 4a is a schematic diagram of a method for communication between network nodes in a network slice according to an embodiment of the present invention;
FIG. 4b is a schematic diagram of a method for communication between network nodes in a network slice according to an embodiment of the present invention;
FIG. 4c is a schematic diagram of a method for communication between network nodes in a network slice according to an embodiment of the present invention;
FIG. 5a is a schematic diagram of a frame structure of a first segment identifier according to an embodiment of the present invention;
FIG. 5b is a schematic diagram of a frame structure of a first segment identifier according to an embodiment of the present invention;
FIG. 5c is a schematic diagram of a frame structure of a first segment identifier according to an embodiment of the present invention;
FIG. 6a is a schematic diagram of a frame structure including a locator field and flag information according to an embodiment of the present invention;
FIG. 6b is a schematic diagram of a frame structure of a function field including a resource identifier according to an embodiment of the present invention;
FIG. 6c is a schematic diagram of a frame structure including a resource bandwidth corresponding to a resource identifier according to an embodiment of the present invention;
FIG. 6d is a schematic diagram of a frame structure including a resource buffer corresponding to a resource identifier according to an embodiment of the present invention;
FIG. 7a is a schematic diagram of a frame structure including a locator field and flag information according to an embodiment of the present invention;
FIG. 7b is a schematic diagram of a frame structure including a resource identifier according to an embodiment of the present invention;
FIG. 7c is a schematic diagram of a frame structure including a resource identifier according to an embodiment of the present invention;
FIG. 8 is a schematic diagram of a method for receiving an identifier in a network according to an embodiment of the present invention;
FIG. 9 is a schematic diagram of a frame structure of a forwarding table according to an embodiment of the present invention;
FIG. 10 is a schematic diagram of a frame structure of a resource matching table according to an embodiment of the present invention;
FIG. 11 is a schematic diagram of a method for transmitting a data packet in a network according to an embodiment of the present invention;
FIG. 12 is a schematic diagram of a method for transmitting a data packet in a network according to an embodiment of the present invention;
FIG. 13 is a schematic diagram of a composition of a communications apparatus according to an embodiment of the present invention;
FIG. 14 is a schematic diagram of a composition of a communications apparatus according to an embodiment of the present invention;
FIG. 15 is a schematic diagram of a composition of a communications apparatus according to an embodiment of the present invention; and
FIG. 16 is a schematic diagram of a composition of a communications apparatus according to an embodiment of the present invention.

### DESCRIPTION OF EMBODIMENTS

First of all, to facilitate understanding of embodiments of this application, some technical terms in embodiments of this application are described:

A network slice (network slice, NS) is a logical network with a specific network characteristic, and is a key technology for satisfying a network requirement of a service in a fifth generation (Fifth Generation, 5G) mobile communications network proposed by the 3rd Generation Partnership Project (3rd Generation Partnership Project, 3GPP). Different network slices are logically isolated from each other, and the network slice can flexibly provide one or more network services based on a requirement of a demand side.

In a bearer network, to satisfy a transmission requirement of a mobile communications network, the bearer network may be divided into a plurality of network slices. A plurality of network nodes may belong to a same network slice, and one network node may join a plurality of network slices. To distinguish a plurality of network slices that each network node joins, a correspondence between the network node and a network slice may be established by using a segment identifier, and each network node allocates different segment identifiers to different network slices that the network node joins. For example, the network node joins a network slice 1, a network slice 2, and a network slice 3, and the network node allocates a segment identifier 1 to the network slice 1, allocates a segment identifier 2 to the network slice 2, and allocates a segment identifier 3 to the network slice 3, to distinguish the network slices 1, 2, and 3.

The following describes implementations of embodiments of this application in detail with reference to the accompanying drawings.

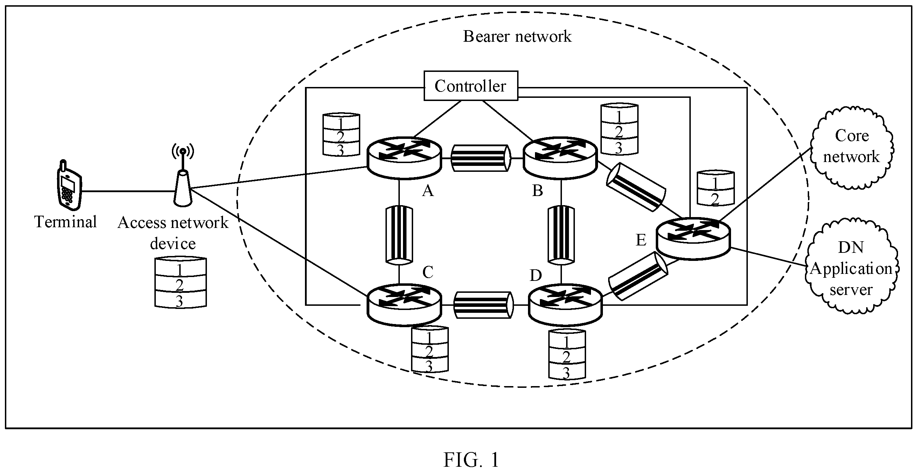

The technical solutions provided in this application may be applied to a network shown in FIG. 1, and the network may be a 5G network. As shown in FIG. 1, the network may include a terminal, an access network device, a bearer network, a core network, and a data network (Data Network, DN). It should be noted that a network architecture shown in FIG. 1 is merely an example architectural diagram. Although not shown, the network shown in FIG. 1 may further include a unified data management (unified data management, UDM) entity, a network data analytics function (network data analytics function, NWDAF) entity, and the like in addition to the network function entities shown in FIG. 1. This is not limited.

The terminal in FIG. 1 may be user equipment (User Equipment, UE), or may be any handheld device, vehicle-mounted device, wearable device, or computing device that has a wireless communication function, or another processing device connected to a wireless modem. The terminal may alternatively be but is not limited to: a subscriber unit (subscriber unit), a cellular phone (cellular phone), a smartphone (smartphone), a wireless data card, a personal digital assistant (Personal Digital Assistant, PDA) computer, a tablet computer, a wireless modem (modem), a handheld (handheld) device, a laptop computer (laptop computer), a cordless phone (cordless phone), a wireless local loop (Wireless Local Loop, WLL) station, a machine type communication (Machine Type Communication, MTC) terminal, a mobile station (Mobile Station, MS), or the like.

The access network device in FIG. 1 is mainly configured to implement functions such as a radio physical layer function, resource scheduling and radio resource management, radio access control, and mobility management. The access network device may be a next generation NodeB (next generation NodeB, gNB) or any other access unit.

The bearer network in FIG. 1 may be divided by an operator into a plurality of network slices logically isolated from each other. Each network slice is formed by integrating different network function entities and physical resources, and is mainly configured to implement a function such as transmitting, to the core network or the DN in the network slice according to a specific path, data sent by an access point device. In a possible structure, some functions of a network node such as a router or a switch may be allocated to one network slice, network slices are isolated from each other, and a plurality of network slices may share one router, one switch, or the like. As shown in FIG. 1, network nodes A, B, C, D, and E join a network slice 1, the network nodes A, B, C, D, and E also join a network slice 2, and the network nodes A, B, C, and D join a network slice 3.

The core network in FIG. 1 may include network function entities such as a session management function (Session Management Function, SMF) entity, a network repository function (Network Repository Function, NRF) entity, a policy control function (Policy Control Function, PCF) entity, a user plane function (User Plane Function, UPF) entity, a network slice selection function (Network Slice Selection Function, NSSF) entity, a network exposure function (Network Exposure Function, NEF) entity, and an access and mobility management function (Access and Mobility Management Function, AMF) entity. In addition, the network further includes an application function (Application Function, AF) entity. The AF entity may be an application control platform of a third party, or may be a device of the operator. The AF entity may provide services for a plurality of application servers.

The DN in FIG. 1 may include various application servers that provide services. In the network shown in FIG. 1, a service provider may subscribe to a network slice from the operator for an application service provided by the application server, and provide a service for a user on the subscribed network slice. Alternatively, the service provider may not specially subscribe to a network slice, but use a public network slice provided by the operator to provide a service for the user. When the service provider subscribes to a network slice from the operator for the application service provided by the application server, an association relationship between an application and the network slice subscribed to by the service provider may be configured in a network node.

In an existing SRv6-based network slicing technology, each network node allocates different SRv6 locators to different network slices that the network node joins. When a relatively large quantity of network slices are established in a 5G network, each network node joins a relatively large quantity of network slices, and allocates a relatively large quantity of locators to the network slices that the network node joins. In this case, because a relatively large quantity of locators are required, an information amount of the locators advertised by using a communications protocol is increased, complexity of route calculation is increased, and a scale of a forwarding table is also increased. This is not conducive to scalability of network slices in the 5G network.

To resolve the foregoing problem, an embodiment of this application provides a method for generating a segment identifier in a network. A network node allocates, to different network slices that the network node joins, segment identifiers each including a topology positioning identifier and a resource identifier. In this embodiment of this application, a topology positioning identifier is decoupled from a resource identifier; and when a network node joins a plurality of network slices, the network node may allocate a same topology positioning identifier to network slices with a same network topology, to reduce a quantity of required topology positioning identifiers in the network. In this way, an information amount of a topology positioning identifier advertised by using a communications protocol is reduced, complexity of route calculation is reduced, and a scale of a forwarding table is reduced. This is conducive to scalability of network slices in the network.

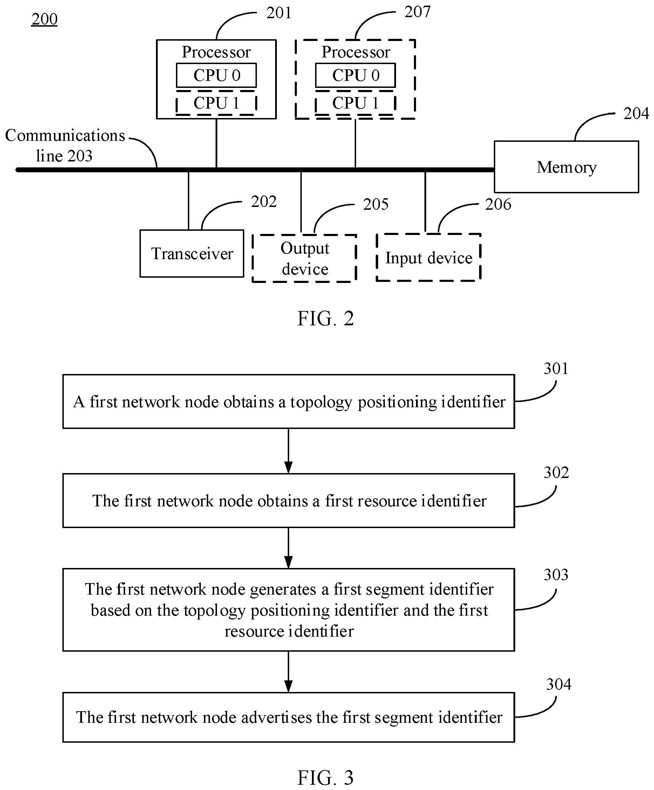

During specific implementation, as shown in FIG. 1, for example, the network nodes and a controller in the bearer network each may use a composition structure shown in FIG. 2, or include components shown in FIG. 2. FIG. 2 is a schematic diagram of a composition of a communications apparatus 200 according to an embodiment of this application. The communications apparatus 200 may be a network node or a chip or a system on chip in a network node, or may be a controller or a chip or a system on chip in a controller. As shown in FIG. 2, the communications apparatus 200 includes a processor 201, a transceiver 202, and a communications line 203.

Further, the communications apparatus 200 may include a memory 204. The processor 201, the memory 204, and the transceiver 202 may be connected by using the communications line 203.

The processor 201 is a central processing unit (central processing unit, CPU), a general-purpose processor network processor (network processor, NP), a digital signal processor (digital signal processor, DSP), a microprocessor, a microcontroller, a programmable logic device (programmable logic device, PLD), or any combination thereof. The processor 201 may alternatively be another apparatus with a processing function, for example, a circuit, a component, or a software module. This is not limited.

The transceiver 202 is configured to communicate with another device or another communications network. The another communications network may be the Ethernet, a radio access network (radio access network, RAN), a wireless local area network (wireless local area network, WLAN), or the like. The transceiver 202 may be a module, a circuit, a transceiver, or any apparatus that can implement communication.

The communications line 203 is configured to transmit information between components included in the communications apparatus 200.

The memory 204 is configured to store instructions. The instructions may be a computer program.

The memory 204 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 204 may exist independently of the processor 201, or may be integrated with the processor 201. The memory 204 may be configured to store instructions, program code, some data, or the like. The memory 204 may be located inside the communications apparatus 200, or may be located outside the communications apparatus 200. This is not limited. The processor 201 is configured to execute the instructions stored in the memory 204, to implement a method for generating a segment identifier in a network, a method for receiving an identifier in a network, and methods for transmitting a data packet in a network that are provided in the following embodiments of this application.

In an example, the processor 201 may include one or more CPUs, for example, a CPU 0 and a CPU 1 in FIG. 2.

In an optional implementation, the communications apparatus 200 includes a plurality of processors. For example, in addition to the processor 201 in FIG. 2, the communications apparatus 200 may further include a processor 207.

In an optional implementation, the communications apparatus 200 further includes an output device 205 and an input device 206. For example, the input device 206 is a device, for example, a keyboard, a mouse, a microphone, or a joystick, and the output device 205 is a device, for example, a display screen or a speaker (speaker).

It should be noted that the communications apparatus 200 may be a desktop computer, a portable computer, a network server, a mobile phone, a tablet computer, a wireless terminal, an embedded device, a chip system, or a device with a structure similar to that in FIG. 2. In addition, the composition structure shown in FIG. 2 does not constitute a limitation on the communications apparatus. In addition to the components shown in FIG. 2, the communications apparatus may include more or fewer components than those shown in the figure, or some components may be combined, or different component arrangements may be used.

In embodiments of this application, the chip system may include a chip, or may include a chip and another discrete component.

In addition, mutual reference may be made to actions, terms, and the like in embodiments of this application. This is not limited. In embodiments of this application, names of messages exchanged between devices, names of parameters in the messages, or the like are merely examples. During specific implementation, other names may alternatively be used. This is not limited.

With reference to the communications system shown in FIG. 1, the following uses an example in which communication is performed between network nodes and communication is performed between a network node and a controller, to describe the method for generating a segment identifier in a network provided in embodiments of this application. A network node and a controller described in the following embodiments each may include the components shown in FIG. 2.

In the communications system shown in FIG. 1, each network node generates different segment identifiers for different network slices that the network node joins. The segment identifier includes a topology positioning identifier and a resource identifier, and the topology positioning identifier is used to indicate a location of the network node in a network topology of a network slice. The resource identifier is used to indicate a processing resource corresponding to the network slice, and the processing resource is used to process a data packet to be transmitted in the network slice.

As shown in FIG. 3, in an embodiment of this application, the method for generating a segment identifier in a network provided in the embodiments of this application is described by using an example in which a first network node allocates a first segment identifier to a first network slice that the first network node joins. As shown in FIG. 3, the method may include the following steps.

Step 301: The first network node obtains a topology positioning identifier.

The topology positioning identifier is used to indicate a location of the first network node in a network topology of the first network slice.

In a possible design, the first network node may receive the topology positioning identifier from a controller.

Optionally, the controller may determine, based on the network topology of the first network slice, a node identifier of the first network node that joins the first network slice, determine, based on the network topology of the first network slice and the node identifier of the first network node, the topology positioning identifier corresponding to the first network slice that the first network node joins, and send the topology positioning identifier to the first network node.

The node identifier is used to indicate identity information of the first network node. A node identifier of each network node in the network may be allocated by the controller; or the node identifier may be allocated by the network node itself and then the allocated node identifier is reported to the controller. This is not limited.

For example, the node identifier of the first network node is A, and the network topology of the first network slice is 1. The controller generates a topology positioning identifier A1 based on the node identifier and the network topology, and sends A1 to the first network node.

The first network node directly obtains the topology positioning identifier from the controller, so that processing load of the first network node can be reduced.

In another possible design, the controller sends the network topology of the first network slice to the first network node, and the first network node generates, based on the network topology of the first network slice and the node identifier of the first network node, the topology positioning identifier corresponding to the first network slice.

For example, the node identifier of the first network node is A, and the network topology of the first network slice is 1. The controller sends the network topology 1 of the first network slice to the first network node, and the first network node generates a topology positioning identifier A1 based on the node identifier A of the first network node and the network topology 1 of the first network slice.

In the foregoing two possible designs, the topology positioning identifier is generated based on the node identifier of the network node and the network topology of the network slice. For one network node, topology positioning identifiers corresponding to network slices with a same network topology are the same, and topology positioning identifiers corresponding to network slices with different network topologies are different.

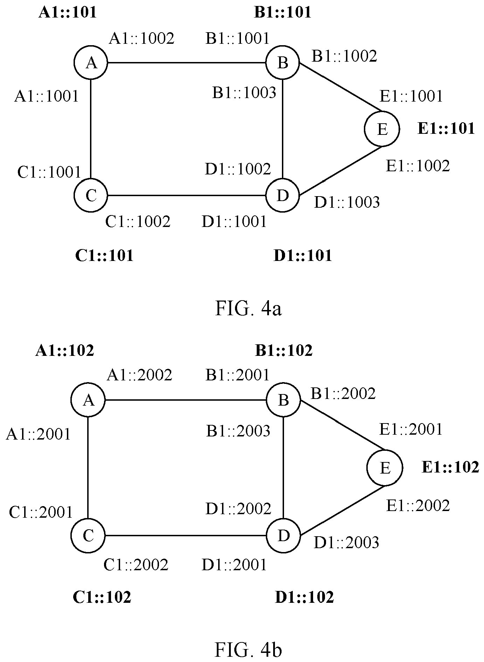

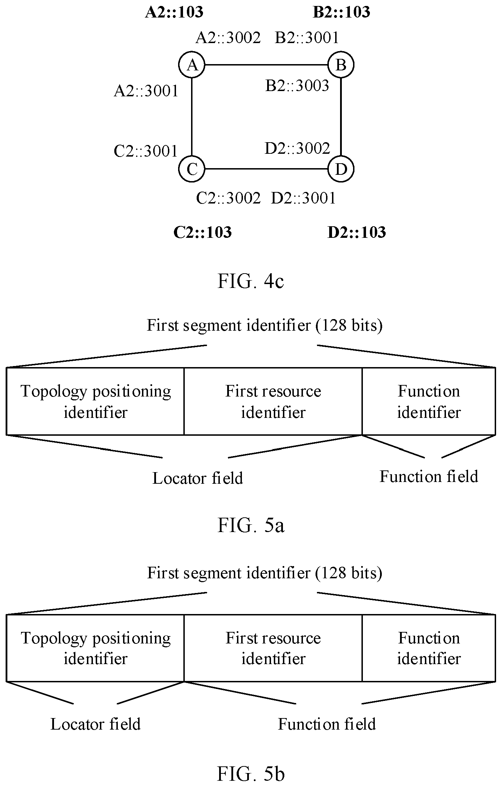

For example, with reference to FIG. 1, as shown in FIG. 4a, FIG. 4b, and FIG. 4c, the network node A joins a network slice 1 shown in FIG. 4a, a network slice 2 shown in FIG. 4b, and a network slice 3 shown in FIG. 4c, and network topologies of the network slice 1 and the network slice 2 are the same. Assuming that the network topology of the network slice 1 is 1, the network topology of the network slice 2 is also 1. A network topology of the network slice 3 is different from the network topologies of the network slice 1 and the network slice 2. Assuming that the network topology of the network slice 3 is 2, for the network node A, a topology positioning identifier generated corresponding to the network slice 1 is A1, a topology positioning identifier generated corresponding to the network slice 2 is also A1, and a topology positioning identifier generated corresponding to the network slice 3 is A2.

For one network node, topology positioning identifiers corresponding to network slices with a same network topology are the same. In this case, a quantity of required topology positioning identifiers in the network can be reduced, to reduce an information amount of a topology positioning identifier that needs to be advertised by using a communications protocol. This is conducive to scalability of network slices in the network.

Step 302: The first network node obtains a first resource identifier.

The first resource identifier is used to indicate a first processing resource corresponding to the first network slice, and the first processing resource is used to process a data packet to be transmitted in the first network slice.

In a possible design, the first network node may receive the first resource identifier from the controller.

The controller may determine, based on a transmission requirement corresponding to the first network slice, processing resource requirement information corresponding to the first network slice, allocate the first resource identifier to the first processing resource corresponding to the processing resource requirement information, and send the processing resource requirement information corresponding to the first network slice and the first resource identifier to the first network node. The first network node determines the first processing resource based on the processing resource requirement information, and stores a correspondence between the first processing resource and the first resource identifier.

The processing resource requirement information corresponding to the first network slice is used to indicate the first processing resource required for the first network slice to satisfy the transmission requirement.

In another possible design, the controller determines, based on a transmission requirement corresponding to the first network slice, processing resource requirement information required for the first network slice, and sends the processing resource requirement information to the first network node. The first network node determines the first processing resource from a processing resource in the first network node based on the processing resource requirement information, and allocates the first resource identifier to the first processing resource.

In the foregoing two possible designs, the first processing resource may include a physical or logical transmission resource such as a sub-interface, a queue, a buffer, or a bandwidth. This is not limited.

When the first network node joins the first network slice and a second network slice that have a same network topology, because transmission requirements that the first network slice and the second network slice need to satisfy are different, processing resources corresponding to the first network slice and the second network slice are different. To be specific, the first network slice corresponds to the first resource identifier used to indicate the first processing resource, and the second network slice corresponds to a second resource identifier used to indicate a second processing resource.

For example, with reference to FIG. 1, for the network slice 1 shown in FIG. 4a, the network slice 2 shown in FIG. 4b, and the network slice 3 shown in FIG. 4c, because the network slices are different, corresponding resource identifiers are also different. To be specific, a resource identifier corresponding to the network slice 1 is 101, a resource identifier corresponding to the network slice 2 is 102, and a resource identifier corresponding to the network slice 3 is 103.

In other words, for one network node, topology positioning identifiers corresponding to network slices with a same network topology are the same, and topology positioning identifiers corresponding to network slices with different network topologies are different. In addition, because transmission requirements that different network slices need to satisfy are different, corresponding resource identifiers are also different.

Optionally, for one network node, a network topology of one network slice that the network node joins may be different from that of another network slice that the network node joins, but transmission requirements that the two network slices need to satisfy are the same; in other words, network topologies corresponding to one network slice that the network node joins and another network slice that the network node joins are different, but processing resources are the same. In this case, a same resource identifier may be allocated to the two network slices, to reduce a quantity of required resource identifiers in the network. This is conducive to scalability of network slices in the network. In addition, because the network topologies of the two network slices are different, and allocated topology positioning identifiers are different, the network slices corresponding to the same resource identifier can be effectively distinguished by using the different topology positioning identifiers.

Step 303: The first network node generates the first segment identifier based on the topology positioning identifier and the first resource identifier.

The first segment identifier includes the topology positioning identifier and the first resource identifier.

In a possible design, as shown in FIG. 5a, the first segment identifier includes a locator field, and the locator field includes the topology positioning identifier and the first resource identifier.

For example, for the network slice 1, a segment identifier generated by the network node A may be A1:101::, a segment identifier generated by a network node B may be B1:101::, a segment identifier generated by a network node C may be C1:101::, a segment identifier generated by a network node D may be D1:101::, and a segment identifier generated by a network node E may be E1:101::.

The network node A may also generate a segment identifier A1:102:: for the network slice 2 that the network node A joins, and generate a segment identifier A2:103:: for the network slice 3 that the network node A joins. Using the segment identifier A1:101:: as an example, a locator field in the segment identifier includes A1:101.

Optionally, as shown in FIG. 5a, the first segment identifier may further include a function field, the function field includes a function identifier, and the function identifier is used to indicate the first network node to perform a processing operation on a received data packet by using the first processing resource indicated by the first resource identifier. For example, the network node A generates the segment identifier A1:101:: for the network slice 1 that the network node A joins. Assuming that a function identifier is 10, the segment identifier may be A1:101::10.

In another possible design, as shown in FIG. 5b, the first segment identifier includes a locator field and a function field, the locator field includes the topology positioning identifier, and the function field includes the first resource identifier.

For example, as shown in FIG. 4a, for the network slice 1, a segment identifier generated by the network node A may be A1::101, a segment identifier generated by the network node B may be B1::101, a segment identifier generated by the network node C may be C1:101, a segment identifier generated by the network node D may be D1::101, and a segment identifier generated by the network node E may be E1::101.

As shown in FIG. 4a, FIG. 4b, and FIG. 4c, the network node A generates the segment identifier A1::101 for the network slice 1 that the network node A joins, generates a segment identifier A1::102 for the network slice 2 that the network node A joins, and generates a segment identifier A2::103 for the network slice 3 that the network node A joins.

Using the segment identifier A1:101:: as an example, in the segment identifier, a locator field includes A1, and a function field includes 101. Optionally, as shown in FIG. 5b, the function field may further include a function identifier, and the function identifier is used to indicate the first network node to perform a processing operation on a received data packet by using the first processing resource indicated by the first resource identifier.

When the function field includes a resource identifier and a function identifier, a new function field, namely, a resource-aware function (resource-aware function) field, may be defined, and the resource-aware function field is used to indicate to perform a corresponding forwarding operation by using a processing resource allocated to a specific network slice.

The resource-aware function field may include an End.R function field or an End.XR function field. The End.R function field is used as a variant of an End function field in a conventional technology, is used to indicate a network node to perform SRv6-based loose path forwarding by using a processing resource allocated by the network node to a network slice that the network node joins. The End.XR function field is used as a variant of an End.X function field in the conventional technology, and is used to indicate a processing resource allocated by a network node on a layer-3 adjacent link to a network slice that the network node joins.

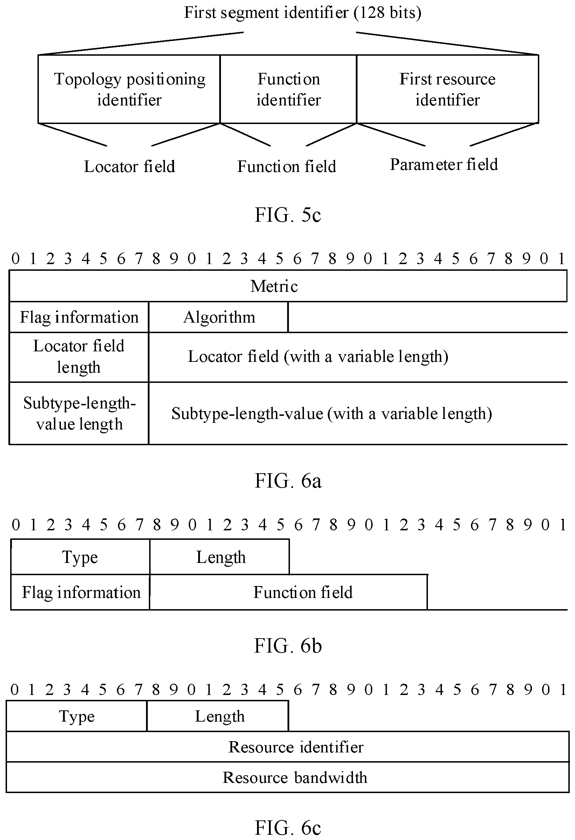

In another possible design, as shown in FIG. 5c, the first segment identifier includes a locator field and a parameter field, the locator field includes the topology positioning identifier, and the parameter field includes the first resource identifier. Optionally, as shown in FIG. 5c, the first segment identifier may further include a function field, the function field includes a function identifier, and the function identifier is used to indicate the first network node to perform a processing operation on a received data packet by using the first processing resource indicated by the first resource identifier in the parameter field.

For example, the network node A may generate a segment identifier A1::10:101 for the network slice 1 that the network node A joins, generate a segment identifier A1::20:102 for the network slice 2 that the network node A joins, and generate a segment identifier A2::30:103 for the network slice 3 that the network node A joins.

Using the segment identifier A1::10:101 as an example, in the segment identifier, a locator field includes A1, a function field includes 10, and a parameter field includes 101.

Further, after each network node generates a corresponding segment identifier for each network slice that the network node joins, the network node may create a local segment identifier table, and store each segment identifier in the local segment identifier table. In this way, after receiving a data packet subsequently, the network node matches a segment identifier in a destination address in the data packet with the local segment identifier table, and performs a corresponding forwarding operation.

For example, in FIG. 4a, FIG. 4b, and FIG. 4c, the network node A may create a local segment identifier table, and store, in the local segment identifier table, the segment identifiers A1:101, A1:102, and A2:103 that are generated by the network node A for the network slices.

Optionally, a network node may further generate a segment identifier corresponding to a link between network nodes. As shown in FIG. 4a, in the network slice 1, the network node A generates a segment identifier A1::1001 for a link between the network node A and the network node C, and generates a segment identifier A1::1002 for a link between the network node A and the network node B. As shown in FIG. 4b, in the network slice 2, the network node A generates a segment identifier A1::2001 for the link between the network node A and the network node C, and generates a segment identifier A1::2002 for the link between the network node A and the network node B. As shown in FIG. 4c, in the network slice 3, the network node A generates a segment identifier A2::3001 for the link between the network node A and the network node C, and generates a segment identifier A2::3002 for the link between the network node A and the network node B.

Optionally, in addition to a network node and a link between network nodes, segment identifiers corresponding to different network slices may be generated for other functions in the network node according to step 301, step 302, and step 303. The segment identifier includes a topology positioning identifier and a resource identifier, the topology positioning identifier is used to indicate a location of the network node in a network topology of a specific network slice, and the resource identifier is used to indicate a corresponding processing resource that is allocated in the specific network slice and that is used for implementing a specific function. The various functions may be a virtual private network (virtual private network, VPN) instance, a service function (service function), a tunnel policy (tunnel policy), and the like. For example, corresponding to the VPN instance in the network, the network node may further generate, for the VPN instance according to step 301, step 302, and step 303, segment identifiers corresponding to different network slices, where the segment identifier includes a resource identifier, and the resource identifier is used to indicate a processing resource that is allocated in a network slice and that is used for implementing the VPN instance.

Step 304: The first network node advertises the first segment identifier.

After each network node in the network generates a corresponding segment identifier for a network slice that the network node joins, the network node may advertise the segment identifier, a topology positioning identifier, and a resource identifier by using the interior gateway protocol (interior gateway protocol, IGP).

In a possible design, the network node may send the segment identifier to the controller, so that the controller can learn of the segment identifier generated by each network node, and the controller determines a forwarding path of a data packet based on the segment identifier generated by each network node.

Optionally, the network node may send a segment identifier in any form in FIG. 5a, FIG. 5b, and FIG. 5c to the controller; and the network node may further send flag information to the controller. The flag information is used to indicate that the segment identifier includes a topology positioning identifier and a resource identifier.

In another possible design, the network node may send the generated topology positioning identifier and the generated resource identifier to another network node, so that the another network node in the network can establish a corresponding mapping relationship based on the received topology positioning identifier and the received resource identifier, to complete forwarding of a data packet in a data packet forwarding process based on the mapping relationship.

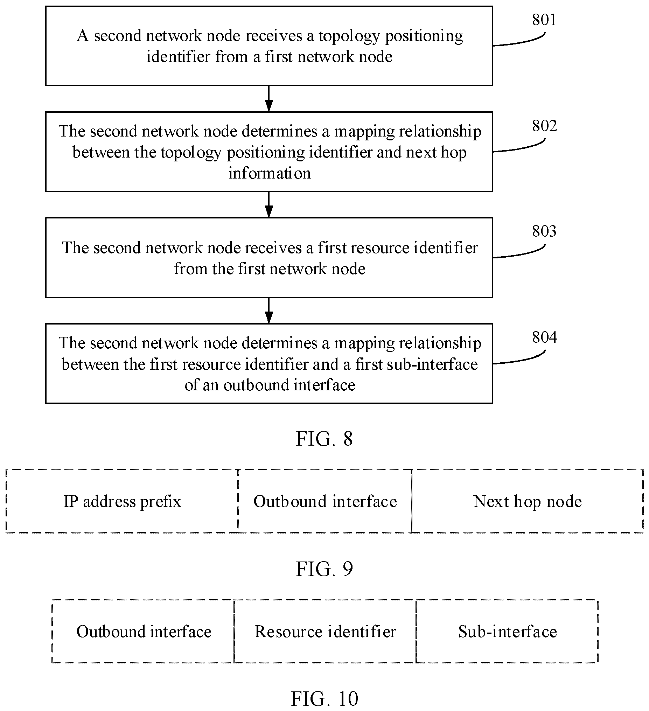

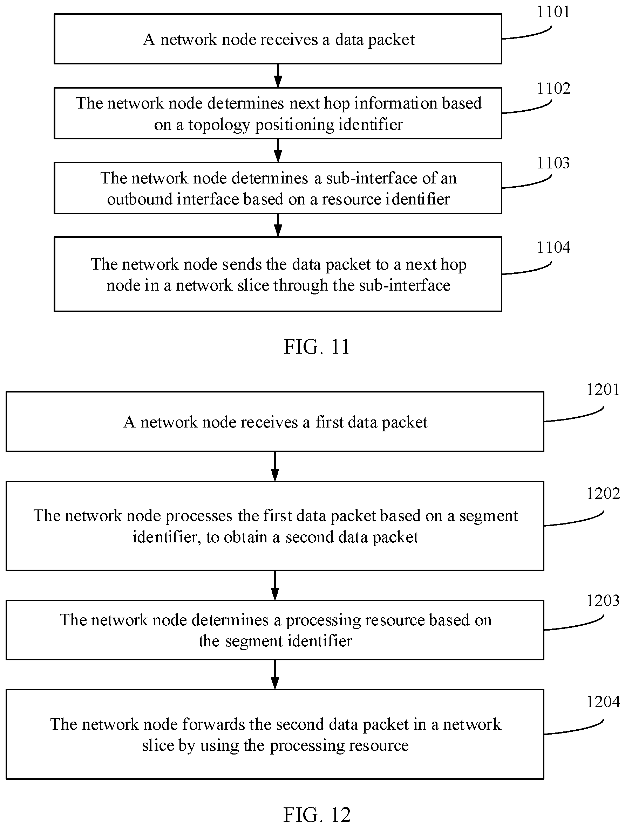

For a specific process in which the network node establishes the corresponding mapping relationship based on the received topology positioning identifier and the received resource identifier, refer to FIG. 8. For a specific process in which the network node completes forwarding of the data packet based on the mapping relationship, refer to FIG. 11 and FIG. 12.

Optionally, FIG. 5a is used as an example. The network node may send, to another network node, the locator field including the topology positioning identifier and the resource identifier; and the network node may further send flag information, where the flag information is used to indicate that the locator field includes the topology positioning identifier and the resource identifier.

Optionally, FIG. 5b is used as an example. The network node may send, to another network node, the locator field including the topology positioning identifier and the function field including the resource identifier. The network node may send the locator field and the function field to the another network node in one sending process, or may send the locator field in one sending process and send the function field in another sending process. When the network node sends the function field in the another sending process, the network node may further send a network slice identifier in this sending process. The network slice identifier is used to indicate a network slice. The another network node may determine, based on the function field and the network slice identifier that are received this time, the network slice corresponding to the resource identifier in the function field.

Optionally, FIG. 5c is used as an example. The network node may send, to another network node, the locator field including the topology positioning identifier and the parameter field including the resource identifier. The network node may send the locator field and the parameter field to the another network node in one sending process, or may send the locator field in one sending process and send the parameter field in another sending process. When the network node sends the parameter field in the another sending process, the network node may further send a network slice identifier in this sending process. The network slice identifier is used to indicate a network slice. The another network node may determine, based on the parameter field and the network slice identifier that are received this time, the network slice corresponding to the resource identifier in the parameter field.

Optionally, the network node may further send the segment identifier to another network node.

When advertising the locator field including the topology positioning identifier, the network node may use a frame structure shown in FIG. 6a. The frame structure includes a 32-bit metric (metric), 8-bit flag information (flags), an 8-bit algorithm (algorithm), an 8-bit locator field length (locator size), a locator field (locator), an 8-bit subtype-length-value length (sub-tlv-len), and a subtype-length-value (sub-tlvs). Lengths of the locator field and the subtype-length-value are variable (variable). The frame structure shown in FIG. 6a is the same as a frame structure used by a network node to advertise a segment identifier in the conventional technology. Details thereof are not described.

When advertising the function field including the resource identifier, the network node may use a frame structure shown in FIG. 6b. The frame structure includes an 8-bit type (type), an 8-bit length (length), 8-bit flag information (flags), and a 16-bit function field (SRv6 Endpoint function).

Optionally, resource attributes or the like corresponding to an End.R function field and an End.XR function field may be advertised by using newly defined sub-sub-tlv.

A frame structure shown in FIG. 6c may be used to advertise a resource bandwidth corresponding to the resource identifier. The frame structure includes an 8-bit type (type), an 8-bit length (length), a 32-bit resource identifier (resource identifier), and a 32-bit resource bandwidth (resource bandwidth).

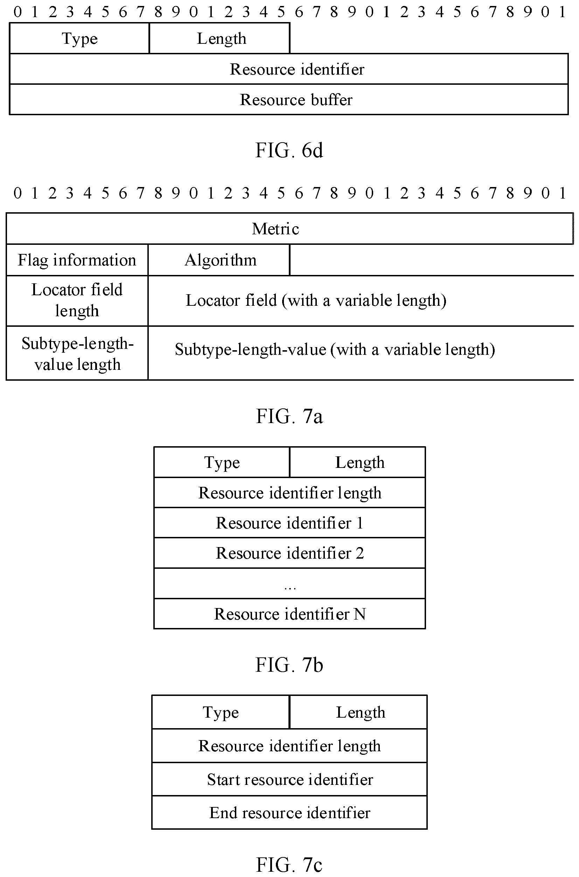

A frame structure shown in FIG. 6d may be used to advertise a resource buffer corresponding to the resource identifier. The frame structure includes an 8-bit type (type), an 8-bit length (length), a 32-bit resource identifier (resource identifier), and a 32-bit resource buffer (resource buffer).

When advertising the locator field including the topology positioning identifier and the resource identifier, the network node may use a frame structure shown in FIG. 7a. The frame structure includes a 32-bit metric (metric), 8-bit flag information (flags), an 8-bit algorithm (algorithm), an 8-bit locator field length (locator size), a locator field (locator), an 8-bit subtype-length-value length (sub-tlv-len), and a subtype-length-value (sub-tlvs).

The locator field length includes a length of the topology positioning identifier. The locator field includes the topology positioning identifier. The subtype-length-value is a newly defined field, and is used to advertise the resource identifier. Lengths of the locator field and the subtype-length-value are variable (variable).

Optionally, if all resource identifiers are allocated by the controller, the network node needs to advertise a resource identifier list used by the network node. For example, the network node may advertise the resource identifier list by using a frame structure shown in FIG. 7b. The frame structure includes a type (type), a length (length), a resource identifier length (resource identifier length), a resource identifier 1 (resource identifier #1), a resource identifier 2 (resource identifier #2), ..., and a resource identifier N (resource identifier #N).

Optionally, if the resource identifier is allocated by the network node itself, because the network node can ensure that all resource identifiers are continuous, advertisement of the resource identifiers may be simplified into advertisement of a resource identifier range. For example, the network node may advertise the resource identifier range by using a frame structure shown in FIG. 7c. The frame structure includes a type (type), a length (length), a resource identifier length (resource identifier length), a start resource identifier (begin resource identifier), and an end resource identifier (end resource identifier).

Based on the method shown in FIG. 3, the network node generates the segment identifier based on the topology positioning identifier and the resource identifier. Compared with a conventional technology in which a network topology and a resource identifier are coupled to generate a locator to identify a network slice corresponding to a network node, in this embodiment of this application, a topology positioning identifier is decoupled from a resource identifier; and when a network node joins a plurality of network slices, the network node may allocate a same topology positioning identifier to network slices with a same network topology. In addition, the network slices corresponding to the same topology positioning identifier are distinguished by using different resource identifiers, to reduce a quantity of allocated topology positioning identifiers while effectively distinguishing the network slices. In this way, an information amount of a topology positioning identifier advertised by using a communications protocol is reduced, complexity of route calculation is reduced, and a scale of a forwarding table is reduced. This is conducive to scalability of network slices in the network.

In step 304, for the specific process in which the network node establishes the corresponding mapping relationship based on the received topology positioning identifier and the received resource identifier, refer to FIG. 8. An embodiment shown in FIG. 8 provides a detailed description by using an example in which a second network node that joins a first network slice establishes a mapping relationship based on a received topology positioning identifier and a received resource identifier that correspond to a first network node that joins the first network slice. FIG. 8 shows a method for receiving an identifier in a network according to this embodiment of this application. As shown in FIG. 8, the method may include the following steps.

Step 801: The second network node receives the topology positioning identifier from the first network node.

The topology positioning identifier is used to indicate a location of the first network node in a network topology of the first network slice.

Step 802: The second network node determines a mapping relationship between the topology positioning identifier and next hop information.

The next hop information is used to send a data packet to the first network node, and the next hop information includes a next hop node and an outbound interface of the second network node.

In a possible design, the second network node determines a mapping relationship between the topology positioning identifier and an Internet Protocol IP address prefix, and determines a mapping relationship between the IP address prefix and the next hop information.

For example, as shown in FIG. 9, the second network node may create a forwarding table to store the mapping relationship between the IP address prefix and the next hop information. The forwarding table may include an IP address prefix, an outbound interface, and a next hop node.

Alternatively, the second network node may establish a mapping relationship between the topology positioning identifier and a subnet mask, and establish a mapping relationship between the subnet mask and the next hop information.

Further, when the second network node does not support a network slice, the second network node establishes the mapping relationship between the topology positioning identifier and the next hop information according to step 801 and step 802, and may forward, to the next hop node based on the mapping relationship, a received data packet through the outbound interface corresponding to the topology positioning identifier. When the second network node supports a network slice, different network slices correspond to different processing resources. In this case, the second network node further needs to establish a mapping relationship between a resource identifier and a sub-interface of the outbound interface according to step 803 and step 804, and complete forwarding of a data packet based on the mapping relationship between the resource identifier and the sub-interface of the outbound interface.

Step 803: The second network node receives a first resource identifier from the first network node.

The first resource identifier is used to indicate a processing resource corresponding to the first network slice.

Step 804: The second network node determines a mapping relationship between the first resource identifier and a first sub-interface of the outbound interface.

The first sub-interface is configured to send a data packet to the first network node in the first network slice.

In a possible design, the second network node may create a resource matching table. As shown in FIG. 10, the resource matching table includes an outbound interface, a resource identifier, and a sub-interface.

Alternatively, the resource matching table may include an outbound interface, a resource identifier, and a queue, and the queue is used to forward a data packet to the next hop node in the first network slice.

Optionally, the second network node receives the first resource identifier and a network slice identifier from the first network node, where the network slice identifier is used to identify the first network slice; and the second network node determines a mapping relationship between the first resource identifier and the first network slice based on the network slice identifier.

Based on the method shown in FIG. 8, a network node creates a forwarding table based on a topology positioning identifier, and creates a resource matching table based on a resource identifier. For one node, topology positioning identifiers corresponding to network nodes with a same network topology are the same. When topology positioning identifiers are the same, corresponding forwarding tables are the same. In this case, a quantity of required topology positioning identifiers in the network are reduced, and a scale of a created forwarding table is also reduced. This is conducive to scalability of network slices in the network.

Based on the foregoing method, each network node generates a segment identifier for each network slice that the network node joins, advertises the generated segment identifier to a controller and another network node, and advertises a topology positioning identifier and a resource identifier to the another network node, so that the another network node establishes a corresponding mapping relationship based on the received topology positioning identifier and the received resource identifier, and completes forwarding of a data packet based on the mapping relationship.

In a data packet forwarding process, the controller may determine, based on a transmission requirement of a data packet, a network node through which the data packet needs to pass in the data packet forwarding process, and place a segment identifier corresponding to the network node in a destination address of the data packet, so that the network node that receives the data packet completes data forwarding based on the segment identifier in the destination address.

Optionally, the controller may generate a segment identifier list including a plurality of segment identifiers, and place the segment identifier list in a destination address of a data packet, so that a network node that receives the data packet may forward the data packet according to a path indicated by the segment identifier list.

In a possible design, if a network node that receives a data packet does not support a network slice, the network node determines an IP address prefix or a subnet mask based on a topology positioning identifier in a segment identifier in a destination address, determines an outbound interface and a next hop node from a pre-created forwarding table based on the determined IP address prefix or the determined subnet mask, and forwards the data packet to the next hop node through the outbound interface.

In another possible design, if a network node that receives a data packet supports a network slice, the network node needs to determine whether a segment identifier in a destination address of the data packet is a segment identifier corresponding to the network node. If the segment identifier in the destination address of the data packet is not a segment identifier corresponding to the network node, the network node may forward the data packet according to steps shown in FIG. 11. If the segment identifier in the destination address of the data packet is a segment identifier corresponding to the network node, the network node may forward the data packet according to steps shown in FIG. 12.

Optionally, a network node may match a segment identifier in a destination address with a local segment identifier table pre-created by the network node, and determine, based on a segment identifier in the local segment identifier table, whether the segment identifier in the destination address is a segment identifier corresponding to the network node.

FIG. 11 shows a method for transmitting a data packet in a network according to an embodiment of this application. As shown in FIG. 11, the method may include the following steps.

Step 1101: A network node receives a data packet.

The data packet includes a destination address field, the destination address field includes a segment identifier, and the segment identifier includes a topology positioning identifier and a resource identifier.

Step 1102: The network node determines next hop information based on the topology positioning identifier.

The next hop information includes a next hop node and an outbound interface of the network node.

Optionally, the network node may determine an Internet Protocol IP address prefix based on the topology positioning identifier; and determine, based on the IP address prefix, the next hop node and the outbound interface of the network node from the pre-created forwarding table shown in FIG. 9.

Step 1103: The network node determines a sub-interface of the outbound interface based on the resource identifier.

Optionally, the network node may determine, based on the resource identifier in the segment identifier and the outbound interface determined in step 1102, the sub-interface of the outbound interface from the pre-created resource matching table shown in FIG. 10.

Alternatively, when the resource matching table includes a mapping relationship among an outbound interface, a resource identifier, and a queue, the network node determines a queue of the outbound interface from the resource matching table based on the resource identifier and the outbound interface.

Step 1104: The network node sends the data packet to the next hop node in a network slice through the sub-interface.

Alternatively, the network node sends the data packet to the next hop node in the network slice through the queue determined in step 1103.

Based on the method shown in FIG. 11, when a network node that supports a network slice receives a data packet whose destination address includes a segment identifier, and the segment identifier is not a segment identifier corresponding to the network node, the network node determines a next hop node and an outbound interface based on a topology positioning identifier in the segment identifier, determines a sub-interface or a queue of the outbound interface based on a resource identifier, and forwards the data packet to the next hop node through the sub-interface or the queue.

FIG. 12 shows another method for transmitting a data packet in a network according to an embodiment of this application. As shown in FIG. 12, the method may include the following steps.

Step 1201: A network node receives a first data packet.

The first data packet includes a destination address field, the destination address field includes a segment identifier, the segment identifier is a segment identifier corresponding to the network node, and the segment identifier includes a topology positioning identifier and a resource identifier.

Step 1202: The network node processes the first data packet based on the segment identifier, to obtain a second data packet.

Step 1203: The network node determines a processing resource based on the segment identifier.

Step 1204: The network node forwards the second data packet in a network slice by using the processing resource.

When the segment identifier carried in the first data packet is a segment identifier corresponding to the network node, the network node processes the first data packet based on a resource indicated by the resource identifier in the segment identifier and an operation indicated by a function identifier in the segment identifier, to obtain the second data packet, and forwards the second data packet by using the processing resource corresponding to the resource identifier.

Optionally, when a destination address in the first data packet carries a segment identifier list, the network node may update the segment identifier in the destination address to a next segment identifier in the segment identifier list. A specific process of updating the segment identifier in the destination address to the next segment identifier in the segment identifier list is the same as that in a conventional technology. Details thereof are not described.

Based on the method described in FIG. 12, when a network node that supports a network slice receives a data packet whose destination address includes a segment identifier, and the segment identifier is a segment identifier corresponding to the network node, the network node forwards the received data packet based on a resource indicated by a resource identifier in the segment identifier and an operation indicated by a function identifier in the segment identifier.

The foregoing mainly describes, from a perspective of interaction between devices, the solutions provided in the embodiments of this application. It may be understood that to implement the foregoing functions, the devices include corresponding hardware structures and/or software modules for performing the functions. A person skilled in the art should be easily aware that with reference to algorithms and steps in the examples described in the embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network node may be divided into function modules based on the foregoing method examples. For example, each function module may be obtained through division for each corresponding function, or two or more functions may be integrated into one processing module. The integrated module may be implemented in a form of hardware, or may be implemented in a form of a software function module. It should be noted that, in embodiments of this application, division into the modules is an example and is merely logical function division. During actual implementation, another division manner may be used.

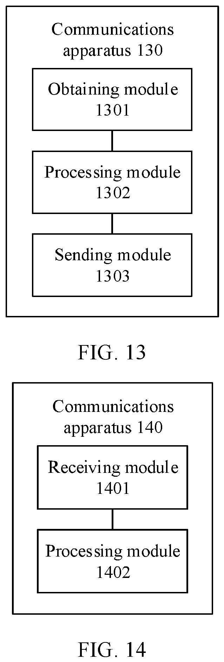

When the function modules are obtained through division in correspondence to the functions, FIG. 13 shows a communications apparatus. The communications apparatus 130 may be a first network node or a chip or a system on chip in a first network node. The communications apparatus 130 may be configured to perform functions of the first network node in the foregoing embodiments. The communications apparatus 130 shown in FIG. 13 includes an obtaining module 1301 and a processing module 1302.

The obtaining module 1301 is configured to obtain a topology positioning identifier used to indicate a location of the first network node in a network topology of a first network slice, and is further configured to obtain a first resource identifier used to indicate a first processing resource corresponding to the first network slice, where the first processing resource is used to process a data packet to be transmitted in the first network slice.

The processing module 1302 is configured to: generate, based on the topology positioning identifier and the first resource identifier, a first segment identifier including the topology positioning identifier and the first resource identifier, and advertise the first segment identifier.

For a specific implementation of the communications apparatus 130, refer to the behavioral functions of the first network node in the method for generating a segment identifier in a network described in FIG. 3.

In a possible design, the obtaining module 1301 is further configured to receive the topology positioning identifier from a controller, or receive the network topology of the first network slice from a controller; and the processing module 1302 is further configured to allocate the topology positioning identifier to the first network slice based on the network topology.

In a possible design, the obtaining module 1301 is further configured to receive the first resource identifier from the controller, or receive processing resource requirement information of the first network slice from the controller; and the processing module 1302 is further configured to: determine the first processing resource based on the processing resource requirement information, and allocate the first resource identifier to the first processing resource.

In a possible design, the network further includes a second network slice, the second network slice is a network slice that the first network node joins, the network topology of the first network slice is the same as a network topology of the second network slice, and the topology positioning identifier is further used to indicate a location of the first network node in the network topology of the second network slice; the obtaining module 1301 is further configured to obtain a second resource identifier used to indicate a second processing resource corresponding to the second network slice, where the second processing resource is used to process a data packet to be transmitted in the second network slice, and the second resource identifier is different from the first resource identifier; the processing module 1302 is further configured to generate a second segment identifier based on the topology positioning identifier and the second resource identifier, where the second segment identifier includes the topology positioning identifier and the second resource identifier; and the processing module is further configured to advertise the second segment identifier.

In a possible design, the communications apparatus 130 further includes a sending module 1303, where the sending module 1303 is configured to send the topology positioning identifier and/or the first resource identifier to at least one second network node.

In a possible design, the processing module 1302 is further configured to: when advertising the first segment identifier, advertise flag information used to indicate that the first segment identifier includes the topology positioning identifier and the first resource identifier.

In a possible design, the first segment identifier includes a locator field, and the locator field includes the first resource identifier; the first segment identifier includes a function field, and the function field includes the first resource identifier; or the first segment identifier includes a parameter field, and the parameter field includes the first resource identifier.

In another implementable manner, the processing module 1302 in FIG. 13 may be replaced by a processor, and the obtaining module 1301 and the sending module 1303 may be replaced by a transceiver; and the processor may integrate a function of the processing module 1302, and the transceiver may integrate functions of the obtaining module 1301 and the sending module 1303. Further, the communications apparatus 130 shown in FIG. 13 may further include a memory. When the processing module 1302 is replaced by the processor, and the obtaining module 1301 and the sending module 1303 are replaced by the transceiver, the communications apparatus 130 in this embodiment of this application may be the communications apparatus shown in FIG. 2.

FIG. 14 is a diagram of a structure of a communications apparatus 140. The communications apparatus 140 may be a second network node or a chip or a system on chip in a second network node. The communications apparatus 140 may be configured to perform functions of the second network node in the foregoing embodiments. The communications apparatus 140 shown in FIG. 14 includes a receiving module 1401 and a processing module 1402.

The receiving module 1401 is configured to receive a topology positioning identifier that is from a first network node and that is used to indicate a location of the first network node in a network topology of a first network slice. The processing module 1402 is configured to determine a mapping relationship between the topology positioning identifier and next hop information used to send a data packet to the first network node, where the next hop information includes a next hop node and an outbound interface of the second network node.

For a specific implementation of the communications apparatus 140, refer to the behavioral functions of the second network node in the method for receiving an identifier in a network in FIG. 8.

In a possible design, the receiving module 1401 is further configured to receive a first resource identifier that is from the first network node and that is used to indicate a processing resource corresponding to the first network slice; and the processing module 1402 is further configured to determine a mapping relationship between the first resource identifier and a first sub-interface of the outbound interface, where the first sub-interface is configured to send a data packet to the first network node in the first network slice.

In a possible design, the receiving module 1401 is further configured to receive the first resource identifier and a network slice identifier used to identify the first network slice from the first network node; and the processing module 1402 is further configured to determine a mapping relationship between the first resource identifier and the first network slice based on the network slice identifier.

In a possible design, the processing module 1402 is specifically further configured to: determine a mapping relationship between the topology positioning identifier and an Internet Protocol IP address prefix, and determine a mapping relationship between the IP address prefix and the next hop information.

In a possible design, the receiving module 1401 is further configured to receive flag information from the first network node, where the flag information is used to indicate that a first segment identifier includes the topology positioning identifier and the first resource identifier.

In a possible design, the network further includes a second network slice, the second network slice is a network slice that the first network node and the second network node join, the network topology of the first network slice is the same as a network topology of the second network slice, and the topology positioning identifier is further used to indicate a location of the first network node in the network topology of the second network slice; the receiving module 1401 is further configured to receive a second resource identifier from the first network node, where the second resource identifier is used to indicate a processing resource corresponding to the second network slice, and the second resource identifier is different from the first resource identifier; and the processing module 1402 is further configured to determine a mapping relationship between the second resource identifier and a second sub-interface of the outbound interface, where the second sub-interface is configured to send a data packet to the first network node in the second network slice.

In another implementable manner, the receiving module 1401 in FIG. 14 may be replaced by a transceiver, the transceiver may integrate a function of the receiving module 1401, the processing module 1402 may be replaced by a processor, and the processor may integrate a function of the processing module 1402. Further, the communications apparatus 140 shown in FIG. 14 may further include a memory. When the sending module 1401 is replaced by the transceiver, and the processing module 1402 is replaced by the processor, the communications apparatus 140 in this embodiment of this application may be the communications apparatus shown in FIG. 2.

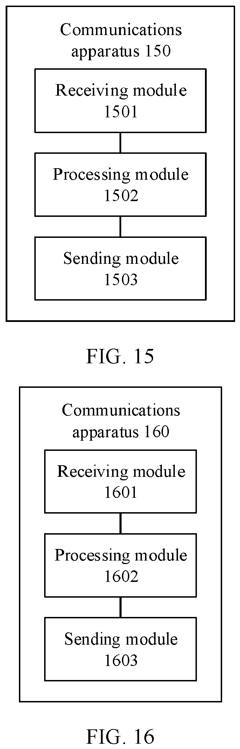

FIG. 15 is a diagram of a structure of a communications apparatus 150. The communications apparatus 150 may be a network node or a chip or a system on chip in a network node. The communications apparatus 150 may be configured to perform functions of the network node in the foregoing embodiments. In an implementable manner, the communications apparatus 150 shown in FIG. 15 includes a receiving module 1501, a processing module 1502, and a sending module 1503.

The receiving module 1501 is configured to receive a data packet including a destination address field, where the destination address field includes a segment identifier including a topology positioning identifier and a resource identifier.

The processing module 1502 is configured to: determine next hop information based on the topology positioning identifier, where the next hop information includes a next hop node and an outbound interface of the network node; and determine, by the network node, a sub-interface of the outbound interface based on the resource identifier. The sending module 1503 is configured to send the data packet to the next hop node in a network slice through the sub-interface.

For a specific implementation of the communications apparatus 150, refer to the behavioral functions of the network node in the method for transmitting a data packet in a network described in FIG. 11.

In a possible design, the processing module 1502 is specifically configured to: determine an Internet Protocol IP address prefix based on the topology positioning identifier and determine the next hop node and the outbound interface of the network node based on the IP address prefix.

In a possible design, the segment identifier includes a locator field, and the locator field includes the resource identifier; the segment identifier includes a function field, and the function field includes the resource identifier; or the segment identifier includes a parameter field, and the parameter field includes the resource identifier.

In another implementable manner, the receiving module 1501 and the sending module 1503 in FIG. 15 may be replaced by a transceiver, and the transceiver may integrate functions of the receiving module 1501 and the sending module 1503. The processing module 1502 may be replaced by a processor, and the processor may integrate a function of the processing module 1502. Further, the communications apparatus 150 shown in FIG. 15 may further include a memory. When the receiving module 1501 and the sending module 1503 are replaced by the transceiver, and the processing module 1502 is replaced by the processor, the communications apparatus 150 in this embodiment of this application may be the communications apparatus shown in FIG. 2.

FIG. 16 is a diagram of a structure of a communications apparatus 160. The communications apparatus 160 may be a network node or a chip or a system on chip in a network node. The communications apparatus 160 may be configured to perform functions of the network node in the foregoing embodiments. In an implementable manner, the communications apparatus 160 shown in FIG. 16 includes a receiving module 1601, a processing module 1602, and a sending module 1603.

The receiving module 1601 is configured to receive a first data packet including a destination address field, where the destination address field includes a segment identifier including a topology positioning identifier and a resource identifier, the segment identifier is a segment identifier corresponding to the network node, the topology positioning identifier is used to indicate a location of the network node in a network topology of a network slice, the resource identifier is used to indicate a processing resource corresponding to the network slice, and the processing resource is used to process a data packet to be transmitted in the network slice.

The processing module 1602 is configured to process the first data packet based on the segment identifier, to obtain a second data packet. The sending module 1603 is configured to forward the second data packet in the network slice by using a processing resource determined based on the segment identifier.

For a specific implementation of the communications apparatus 160, refer to the behavioral functions of the network node in the method for transmitting a data packet in a network described in FIG. 12.

In a possible design, the segment identifier includes a locator field, and the locator field includes the topology positioning identifier and the resource identifier; the segment identifier includes a function field, and the function field includes the resource identifier; or the segment identifier includes a parameter field, and the parameter field includes the resource identifier.

In another implementable manner, the receiving module 1601 and the sending module 1603 in FIG. 16 may be replaced by a transceiver, and the transceiver may integrate functions of the receiving module 1601 and the sending module 1603. The processing module 1602 may be replaced by a processor, and the processor may integrate a function of the processing module 1602. Further, the communications apparatus 160 shown in FIG. 16 may further include a memory. When the receiving module 1601 and the sending module 1603 are replaced by the transceiver, and the processing module 1602 is replaced by the processor, the communications apparatus 160 in this embodiment of this application may be the communications apparatus shown in FIG. 2.

An embodiment of this application further provides a computer-readable storage medium. All or some of the procedures in the foregoing method embodiments may be completed by a computer program instructing related hardware. The program may be stored in the foregoing computer-readable storage medium. When the program is executed, the procedures of the foregoing method embodiments may be included. The computer-readable storage medium may be an internal storage unit of a terminal (including a data transmit end and/or a data receive end) in any of the foregoing embodiments, for example, a hard disk or a memory of the terminal. The computer-readable storage medium may alternatively be an external storage device of the terminal, for example, a plug-in hard disk, a smart media card (smart media card, SMC), a secure digital (secure digital, SD) card, or a flash card (flash card) provided in the terminal. Further, the computer-readable storage medium may include both the internal storage unit and the external storage device of the terminal. The computer-readable storage medium is configured to store the computer program and other programs and data that are required by the terminal. The computer-readable storage medium may be further configured to temporarily store data that has been output or is to be output.

It should be noted that, in the specification, claims, and accompanying drawings of this application, terms "first", "second", and the like are intended to distinguish between different objects but do not indicate a particular order. In addition, terms "including", "having", and any variant thereof are intended to cover non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

It should be understood that in this application, "at least one (item)" means one or more, "a plurality of' means two or more, and "at least two (items)" means two, three, or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including any combination of singular items (pieces) or plural items (pieces). For example, at least one of a, b, or c may represent: a, b, c, "a and b", "a and c", "b and c", or "a, b, and c", where a, b, and c may be singular or plural.

Based on the foregoing descriptions of the implementations, a person skilled in the art may clearly understand that for the purpose of convenient and brief description, division into the foregoing function modules is merely used as an example for illustration. During actual application, the foregoing functions can be allocated to different function modules for implementation based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may be one or more physical units, in other words, may be located in one place, or may be distributed in a plurality of different places. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for generating a segment identifier in a network, wherein the network comprises a first network slice, and the first network slice is a network slice that a first network node joins; and the method comprises:
obtaining, by the first network node, a topology positioning identifier, wherein the topology positioning identifier is used to indicate a location of the first network node in a network topology of the first network slice;
obtaining, by the first network node, a first resource identifier, wherein the first resource identifier is used to indicate a first processing resource corresponding to the first network slice, and the first processing resource is used to process a data packet to be transmitted in the first network slice;
generating, by the first network node, a first segment identifier based on the topology positioning identifier and the first resource identifier, wherein the first segment identifier comprises the topology positioning identifier and the first resource identifier; and
advertising, by the first network node, the first segment identifier.

2. The method according to claim 1, wherein the obtaining, by the first network node, a topology positioning identifier comprises:
receiving, by the first network node, the topology positioning identifier from a controller; or
receiving, by the first network node, the network topology of the first network slice from a controller, and allocating the topology positioning identifier to the first network slice based on the network topology.

3. The method according to claim 1 or 2, wherein the obtaining, by the first network node, a first resource identifier comprises:
receiving, by the first network node, the first resource identifier from the controller; or
receiving, by the first network node, processing resource requirement information of the first network slice from the controller, determining the first processing resource based on the processing resource requirement information, and allocating the first resource identifier to the first processing resource.

4. The method according to any one of claims 1 to 3, wherein the network further comprises a second network slice, the second network slice is a network slice that the first network node joins, the network topology of the first network slice is the same as a network topology of the second network slice, and the topology positioning identifier is further used to indicate a location of the first network node in the network topology of the second network slice; and
the method further comprises:
obtaining, by the first network node, a second resource identifier, wherein the second resource identifier is used to indicate a second processing resource corresponding to the second network slice, the second processing resource is used to process a data packet to be transmitted in the second network slice, and the second resource identifier is different from the first resource identifier;
generating, by the first network node, a second segment identifier based on the topology positioning identifier and the second resource identifier, wherein the second segment identifier comprises the topology positioning identifier and the second resource identifier; and
advertising, by the first network node, the second segment identifier.

5. The method according to any one of claims 1 to 4, wherein the method further comprises:
sending, by the first network node, the topology positioning identifier and/or the first resource identifier to at least one second network node.

6. The method according to any one of claims 1 to 5, wherein the advertising, by the first network node, the first segment identifier comprises:
advertising, by the first network node, flag information, wherein the flag information is used to indicate that the first segment identifier comprises the topology positioning identifier and the first resource identifier.

7. The method according to any one of claims 1 to 6, wherein
the first segment identifier comprises a locator field, and the locator field comprises the first resource identifier;
the first segment identifier comprises a function field, and the function field comprises the first resource identifier; or
the first segment identifier comprises a parameter field, and the parameter field comprises the first resource identifier.

8. A method for receiving an identifier in a network, wherein the network comprises a first network slice, and the first network slice is a network slice that a first network node and a second network node join; and the method comprises:
receiving, by the second network node, a topology positioning identifier from the first network node, wherein the topology positioning identifier is used to indicate a location of the first network node in a network topology of the first network slice; and
determining, by the second network node, a mapping relationship between the topology positioning identifier and next hop information, wherein the next hop information is used to send a data packet to the first network node, and the next hop information comprises a next hop node and an outbound interface of the second network node.

9. The method according to claim 8, wherein the method further comprises:
receiving, by the second network node, a first resource identifier from the first network node, wherein the first resource identifier is used to indicate a processing resource corresponding to the first network slice; and
determining, by the second network node, a mapping relationship between the first resource identifier and a first sub-interface of the outbound interface, wherein the first sub-interface is configured to send a data packet to the first network node in the first network slice.

10. The method according to claim 9, wherein the receiving, by the second network node, a first resource identifier from the first network node comprises:
receiving, by the second network node, the first resource identifier and a network slice identifier from the first network node, wherein the network slice identifier is used to identify the first network slice; and
determining, by the second network node, a mapping relationship between the first resource identifier and the first network slice based on the network slice identifier.

11. The method according to any one of claims 8 to 10, wherein the determining, by the second network node, a mapping relationship between the topology positioning identifier and next hop information comprises:
determining, by the second network node, a mapping relationship between the topology positioning identifier and an Internet Protocol IP address prefix; and
determining, by the second network node, a mapping relationship between the IP address prefix and the next hop information.

12. The method according to any one of claims 8 to 11, wherein the second network node further receives flag information from the first network node, and the flag information is used to indicate that a first segment identifier comprises the topology positioning identifier and the first resource identifier.

13. The method according to any one of claims 9 to 12, wherein the network further comprises a second network slice, the second network slice is a network slice that the first network node and the second network node join, the network topology of the first network slice is the same as a network topology of the second network slice, and the topology positioning identifier is further used to indicate a location of the first network node in the network topology of the second network slice; and
the method further comprises:
receiving, by the second network node, a second resource identifier from the first network node, wherein the second resource identifier is used to indicate a processing resource corresponding to the second network slice, and the second resource identifier is different from the first resource identifier; and
determining, by the second network node, a mapping relationship between the second resource identifier and a second sub-interface of the outbound interface, wherein the second sub-interface is configured to send a data packet to the first network node in the second network slice.

14. A method for transmitting a data packet in a network, wherein the network comprises a network slice, and the network slice is a network slice that a network node joins; and the method comprises:
receiving, by the network node, a data packet, wherein the data packet comprises a destination address field, the destination address field comprises a segment identifier, and the segment identifier comprises a topology positioning identifier and a resource identifier;
determining, by the network node, next hop information based on the topology positioning identifier, wherein the next hop information comprises a next hop node and an outbound interface of the network node;
determining, by the network node, a sub-interface of the outbound interface based on the resource identifier; and
sending, by the network node, the data packet to the next hop node in the network slice through the sub-interface.

15. The method according to claim 14, wherein the determining, by the network node, next hop information based on the topology positioning identifier comprises:
determining, by the network node, an Internet Protocol IP address prefix based on the topology positioning identifier; and
determining, by the network node, the next hop node and the outbound interface of the network node based on the IP address prefix.

16. The method according to claim 14 or 15, wherein
the segment identifier comprises a locator field, and the locator field comprises the resource identifier;
the segment identifier comprises a function field, and the function field comprises the resource identifier; or
the segment identifier comprises a parameter field, and the parameter field comprises the resource identifier.

17. A method for transmitting a data packet in a network, wherein the network comprises a network slice, and the network slice is a network slice that a network node joins; and the method comprises:
receiving, by the network node, a first data packet, wherein the first data packet comprises a destination address field, the destination address field comprises a segment identifier, the segment identifier is a segment identifier corresponding to the network node, the segment identifier comprises a topology positioning identifier and a resource identifier, the topology positioning identifier is used to indicate a location of the network node in a network topology of the network slice, the resource identifier is used to indicate a processing resource corresponding to the network slice, and the processing resource is used to process a data packet to be transmitted in the network slice;
processing, by the network node, the first data packet based on the segment identifier, to obtain a second data packet;
determining, by the network node, the processing resource based on the segment identifier; and
forwarding, by the network node, the second data packet in the network slice by using the processing resource.

18. The method according to claim 17, wherein
the segment identifier comprises a locator field, and the locator field comprises the resource identifier;
the segment identifier comprises a function field, and the function field comprises the resource identifier; or
the segment identifier comprises a parameter field, and the parameter field comprises the resource identifier.

19. A communications apparatus, wherein the communications apparatus comprises one or more processors and one or more memories; and the one or more memories are coupled to the one or more processors, and the one or more memories are configured to store computer program code or computer instructions; and
when the one or more processors execute the computer instructions, the communications apparatus is enabled to perform the method for generating a segment identifier in a network according to any one of claims 1 to 7, the method for receiving an identifier in a network according to any one of claims 8 to 13, the method for transmitting a data packet in a network according to any one of claims 14 to 16, or the method for transmitting a data packet in a network according to either of claims 17 and 18.

20. A computer-readable storage medium, wherein the computer-readable storage medium stores computer instructions or a program; and when the computer instructions or the program is run on a computer, the computer is enabled to perform the method for generating a segment identifier in a network according to any one of claims 1 to 7, the method for receiving an identifier in a network according to any one of claims 8 to 13, the method for transmitting a data packet in a network according to any one of claims 14 to 16, or the method for transmitting a data packet in a network according to either of claims 17 and 18.

21. A communications system, wherein the communications system comprises a plurality of network nodes, and the plurality of network nodes comprise a first network node and a second network node, wherein
the first network node is configured to obtain a topology positioning identifier, wherein the topology positioning identifier is used to indicate a location of the first network node in a network topology of the first network slice; the first network node obtains a first resource identifier, wherein the first resource identifier is used to indicate a first processing resource corresponding to the first network slice, and the first processing resource is used to process a data packet to be transmitted in the first network slice; the first network node generates a first segment identifier based on the topology positioning identifier and the first resource identifier, wherein the first segment identifier comprises the topology positioning identifier and the first resource identifier; and the first network node advertises the first segment identifier; and
the second network node is configured to receive the topology positioning identifier from the first network node, wherein the topology positioning identifier is used to indicate the location of the first network node in the network topology of the first network slice; and the second network node determines a mapping relationship between the topology positioning identifier and next hop information, wherein the next hop information is used to send a data packet to the first network node, and the next hop information comprises a next hop node and an outbound interface of the second network node.

22. A communications system, comprising a plurality of network nodes, wherein
the network node is configured to receive a data packet, wherein the data packet comprises a destination address field, the destination address field comprises a segment identifier, and the segment identifier comprises a topology positioning identifier and a resource identifier; the network node determines next hop information based on the topology positioning identifier, wherein the next hop information comprises a next hop node and an outbound interface of the network node; the network node determines a sub-interface of the outbound interface based on the resource identifier; and the network node sends the data packet to the next hop node in a network slice through the sub-interface; or
the network node is configured to receive a first data packet, wherein the first data packet comprises a destination address field, the destination address field comprises a segment identifier, the segment identifier is a segment identifier corresponding to the network node, and the segment identifier comprises a topology positioning identifier and a resource identifier; the network node processes the first data packet based on the segment identifier, to obtain a second data packet; the network node determines a processing resource based on the segment identifier; and the network node forwards the second data packet in a network slice by using the processing resource.
